# EUROPEAN PATENT SPECIFICATION

(11) **EP 4 202 368 B1**
(45) Date of publication and mention of the grant of the patent: **12.08.2026**
(21) Application number: 22213111.2
(22) Date of filing: 13.12.2022
(51) Int. Cl.: G01C 21/20, G05D 1/00, G01C 21/34

(54) **INFORMATION PROCESSING APPARATUS, ROUTE GENERATION SYSTEM, ROUTE GENERATING METHOD, AND CARRIER MEANS**
INFORMATIONSVERARBEITUNGSVORRICHTUNG, ROUTENERZEUGUNGSSYSTEM, ROUTENERZEUGUNGSVERFAHREN UND TRÄGERMITTEL
APPAREIL DE TRAITEMENT D'INFORMATIONS, SYSTÈME DE GÉNÉRATION D'ITINÉRAIRE, PROCÉDÉ DE GÉNÉRATION D'ITINÉRAIRE ET MOYENS DE SUPPORT

(30) Priority: 24.12.2021 JP 2021211071; 21.11.2022 JP 2022185789
(43) Date of publication of application: 28.06.2023
(73) Proprietor: Ricoh Company, Ltd., Tokyo 143-8555 (JP)
(72) Inventor: BANDO, Hanako, Tokyo, 143-8555 (JP); OHTSUKA, Aiko, Tokyo, 143-8555 (JP); KUDO, Koichi, Tokyo, 143-8555 (JP)
(74) Representative: SSM Sandmair

(56) References cited:
- EP-A1- 4 167 043
- WO-A1-2021/256062
- KR-B1- 102 206 512

## Description

### BACKGROUND

### Technical Field

The present invention is directed to a route generation system, a route generating method, and a carrier means.

### Related Art

A mobile apparatus provided in a site, such as a factory or a warehouse, and is autonomously movable in the site is known.

Such a mobile apparatus is used as, for example, an inspection robot or a service robot, and can perform a task such as inspection of equipment at the site in place of a human worker. In addition, such a known mobile apparatus autonomously moves to a movement destination by an operator designing the movement destination based on location information or a name related to the movement destination.

For example, Japanese Unexamined Patent Application Publication No. 2010-250469 discloses a mobile apparatus including a traveling device that causes a vehicle body to travel, a control device that controls the traveling device, a first camera that captures an image in a front direction of the vehicle body, and a second camera that captures an image in a back direction of the vehicle body. The control device of the mobile apparatus includes a teaching image acquisition unit that stores images acquired by the first camera and the second camera at teaching points on a preset traveling route of the vehicle body as teaching images, and a traveling control unit that controls the traveling device based on a comparison result obtained by comparing between a captured image captured in real time by the first camera and the teaching image acquired in advance by the teaching image acquisition unit.

A system according to a related art has a configuration to control a mobile apparatus by using images captured in a front direction and a back direction of the mobile apparatus. With this configuration, when the mobile apparatus enters a point from other than the front direction and the back direction, the mobile apparatus hardly recognizes that the point is the same position as a point learned in the past. For example, when the mobile apparatus that has learned an intersection with respect to the front-back direction enters the intersection from a street in the left-right direction, the mobile apparatus hardly recognizes that the intersection is the same place as the intersection learned in the past. For this reason, the mobile apparatus moves a lot to generate a route for autonomous movement of the mobile apparatus.

WO 2021/256062 A1 discloses an autonomous movement device comprising a drive unit, a storage unit, and a control unit. The control unit: causes the storage unit to store teaching data which has been taught; controls the drive unit on the basis of the teaching data to cause the autonomous movement device to travel automatically; controls the drive unit, at a hold point, which is a point where the automatic travel of the autonomous movement device is temporarily stopped, to cause the autonomous movement device to travel in a travel mode other than the automatic travel; and when the autonomous movement device reaches the vicinity of the hold point by using the travel mode other than the automatic travel, restarts the automatic travel which has been temporarily stopped.

### SUMMARY

The invention is set out in the appended independent claims. The dependent claims describe advantageous embodiments.

According to an embodiment of the present disclosure, movement of a mobile apparatus for generating a route for autonomous movement of the mobile apparatus is reduced.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an example of an overall configuration of a route generation system according to an exemplary embodiment of the disclosure;
FIG. 2 is a diagram illustrating an example of a route for movement of a mobile apparatus according to the exemplary embodiment of the disclosure;
FIG. 3A is a diagram illustrating an example of a schematic configuration of the mobile apparatus according to the exemplary embodiment of the disclosure; and FIG. 3B is a diagram illustrating a variation of a schematic configuration of the mobile apparatus according to the exemplary embodiment of the disclosure;
FIG. 4 is a block diagram illustrating an example of a hardware configuration of the mobile apparatus according to the exemplary embodiment of the disclosure;
FIG. 5 is a block diagram illustrating an example of a hardware configuration of each of a route management server and a communication terminal according to the exemplary embodiment of the disclosure;
FIG. 6 is a block diagram illustrating an example of a functional configuration of the route generation system according to the exemplary embodiment of the disclosure;
FIG. 7 is a conceptual diagram illustrating an example of an image information management table according to the exemplary embodiment of the disclosure;
FIG. 8 is a conceptual diagram illustrating an example of a point information management table according to the exemplary embodiment of the disclosure;
FIG. 9 is a conceptual diagram illustrating an example of a route information management table according to the exemplary embodiment of the disclosure;
FIG. 10 is a diagram illustrating an example of a positional relationship between points according to the exemplary embodiment of the disclosure;
FIG. 11 is a flowchart illustrating an example of a process until autonomous movement of the mobile apparatus is performed according to the exemplary embodiment of the disclosure;
FIG. 12 is a diagram illustrating an example of transition of an operation screen according to the exemplary embodiment of the disclosure;
FIG. 13 is a sequence diagram illustrating an example of a route learning process according to the exemplary embodiment of the disclosure;
FIG. 14 is a diagram illustrating an example of transition of an operation screen according to the exemplary embodiment of the disclosure;
FIG. 15 is a diagram illustrating an example of routes according to the exemplary embodiment of the disclosure;
FIG. 16 is a sequence diagram illustrating an example of a route learning process in a case of newly generating a route, according to the exemplary embodiment of the disclosure;
FIGS. 17A, 17B, and 17C are diagrams illustrating change in the route information management table when a new route is generated, according to the exemplary embodiment of the disclosure;
FIG. 18 is a diagram illustrating an example of a point information management table in a case of generating a new route, according to the exemplary embodiment of the disclosure;
FIG. 19 is a sequence diagram illustrating an example of route learning in a case where a point is added on a registered route, according to the exemplary embodiment of the disclosure;
FIG. 20 is a sequence diagram illustrating an example of a route generating process according to the exemplary embodiment of the disclosure;
FIG. 21 is a sequence diagram illustrating an example of an autonomous movement process according to the exemplary embodiment of the disclosure;
FIG. 22 is a diagram illustrating a variation of the operation screen according to the exemplary embodiment of the disclosure;
FIG. 23 is a diagram illustrating another variation of the operation screen according to the exemplary embodiment of the disclosure;
FIG. 24 is a diagram illustrating sill another variation of the operation screen according to the exemplary embodiment of the disclosure; and
FIG. 25 is a diagram illustrating an example of a functional configuration of a route generation system according to another embodiment of the disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the attached drawings. In the description of the drawings, the same elements are denoted by the same reference numerals, and redundant descriptions thereof are omitted.

### System Configuration

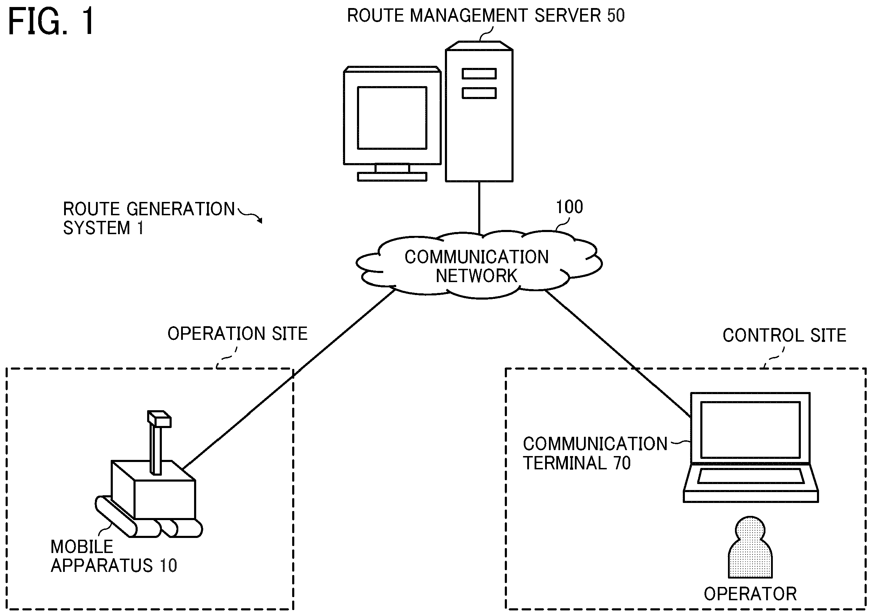

FIG. 1 is a diagram illustrating an example of an overall configuration of a route generation system according to an exemplary embodiment. A route generation system 1 illustrated in FIG. 1 is a system that generates a route for autonomous movement of a mobile apparatus 10 in a predetermined site. The route generation system 1 can also be referred to as a system for constructing a route, or a route construction system.

The route generation system 1 includes the mobile apparatus 10, a route management server 50, and a communication terminal 70.

The mobile apparatus 10, the route management server 50, and the communication terminal 70 communicate with each other via a communication network 100. The communication network 100 is implemented by the Internet, a mobile communication network, or a local area network (LAN), for example. The communication network 100 may include, in addition to a wired network, a wireless network in compliance with such as 3rd Generation (3G), 4th Generation (4G), 5th Generation (5G), Wireless Fidelity (WI-FI), Worldwide Interoperability for Microwave Access (WiMAX), Long Term Evolution (LTE), etc.

The mobile apparatus 10 is a robot that is provided at an operation site and autonomously moves from one location to another location at the operation site. The autonomous movement of the mobile apparatus 10 includes operation of autonomously travelling in the operation site by using a result of imitation learning (machine learning) of past travel routes. The autonomous movement of the mobile apparatus 10 further includes operation of autonomously travelling in the operation site according to a route set in advance, and operation of autonomously travelling in the operation site using a technique such as line tracing.

Further, the mobile apparatus 10 may travel according to manual operation by a user at a remote location.

In other words, the mobile apparatus 10 may move in the operation site while switching between the movement controlled by manual operation of the user and the autonomous movement.

The mobile apparatus 10 may perform a preset task such as inspection, maintenance, transportation, or light work, while travelling in the operation site. In the description of embodiments, the mobile apparatus 10 includes a robot, and such a robot may be any types of robot that can perform both of movement controlled by manual operation of a user at a remote location and autonomous movement. In some embodiments, the mobile apparatus 10 may be an automobile that can travel while switching between automatic driving and manual driving by user operation at a remote location. Furthermore, in some embodiments, the mobile apparatus 10 may be a flying object such as a drone, a multicopter, or an unmanned flying object.

The operation site where the mobile apparatus 10 is provided is, for example, an outdoor site such as a business site, a factory, a construction site, a substation, a farm, a field, an agricultural field, a cultivated land, or a disaster site, or an indoor site such as an office, a school, a factory, a warehouse, a commercial facility, a hospital, or a care facility. In other words, the operation site may be any location where there is a need to cause the mobile apparatus 10 to perform a task that has been manually performed by a human.

The route management server 50 is a server computer for managing information in relation to a route for autonomous movement of the mobile apparatus 10. The route management server 50 stores and manages a captured image transmitted from the mobile apparatus 10, and provides the captured image to the communication terminal 70 used by the operator.

The route management server 50 may be configured by a single computer or a plurality of computers to which divided portions (functions or means) are arbitrarily allocated. All or a part of the functions of the route management server 50 may be implemented by a server computer in a cloud environment or a server computer in an on-premises environment. The route management server 50 is an example of an "information processing apparatus."

The communication terminal 70 is a computer such as a laptop personal computer (PC) used by the operator (user) who performs a predetermined operation with respect to the mobile apparatus 10 provided in the operation site. The operator at a control site, such as an office, checks a current position of the mobile apparatus 10 by viewing a captured image captured by the mobile apparatus 10. The operator may further remotely operate the mobile apparatus 10 while viewing the captured image of the operation site displayed on the communication terminal 70. The communication terminal 70 is not limited to a laptop PC, and may be a desktop PC, a tablet terminal, a smartphone, or a wearable terminal, for example.

Although in the example of FIG. 1, one mobile apparatus 10 and one communication terminal 70 are connected to each other via the communication network 100, the communication terminal 70 may be connected to a plurality of mobile apparatuses 10 located at one operation site. Alternatively, the communication terminal 70 may be connected to a plurality of mobile apparatus 10 located at different operation sites. In addition, although in the example of FIG. 1, a case in which the communication terminal 70 is located at the control site that is remotely located from the operation site at which the mobile apparatus 10 is provided is illustrated, the communication terminal 70 may be located at the operation site at which the mobile apparatus 10 is provided.

### Overview

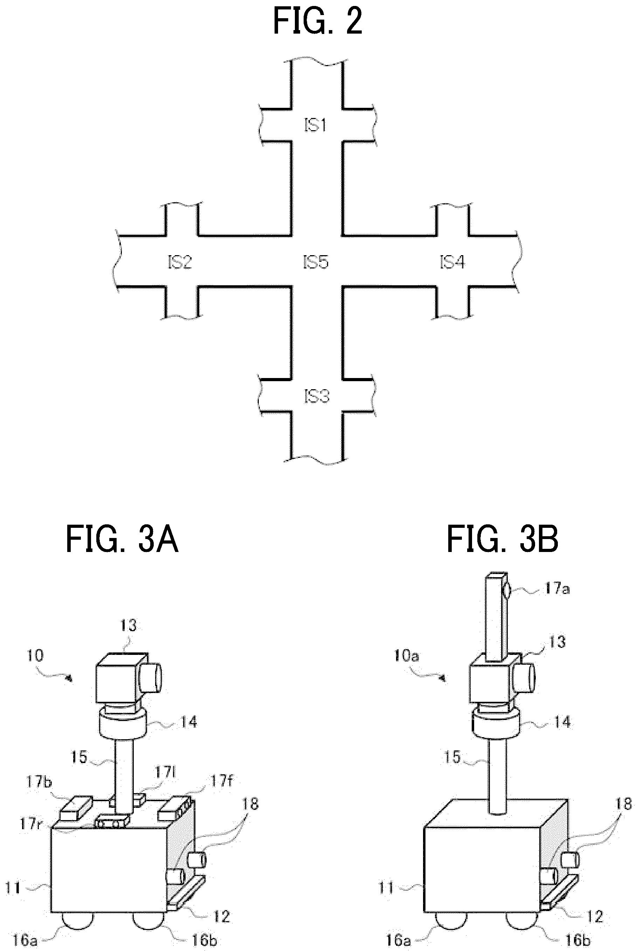

An overview of learning a route for autonomous movement by the mobile apparatus 10 is described with reference to FIG. 2.

FIG. 2 is a diagram illustrating an example of a movement route, or a travel route, of a mobile apparatus.

It is assumed that intersections IS1 to IS5 as illustrated in FIG. 2 are present on the movement route of the mobile apparatus 10. Regarding this, how the intersection IS5 is seen from the mobile apparatus 10 varies depending on from which direction the mobile apparatus 10 moves. More specifically, how the intersection IS5 is seen in a case where the mobile apparatus 10 moves on a street of longitudinal direction, which starts from the intersection IS1, passes through the intersection IS5, and ends at the intersection IS3 (IS1-IS5-IS3), is different from that in a case where the mobile apparatus 10 moves on a street of lateral direction, which starts from the intersection IS2, passes through the intersection IS5, and ends at the intersection IS4 (IS2-IS5-IS4). In other words, the captured image captured by the mobile apparatus 10 at the intersection IS5 differs. Accordingly, even when the mobile apparatus 10 has an experience of passing through the intersection IS5, if the mobile apparatus 10 enters the intersection IS5 from a different direction, the mobile apparatus 10 has difficulty to recognize that the intersection IS5 is the same one that has been passed through in the past.

As a method for causing the mobile apparatus 10 to recognize the intersection IS5 as the same place even when the mobile apparatus 10 enters the intersection IS5 from a different direction, there is a method of teaching images in all directions of the intersection IS5 to the mobile apparatus 10. For example, the mobile apparatus 10 is provided with a device for capturing images in the forward and backward directions, and six routes (IS1-IS5-IS3, IS2-IS5-IS4, IS1-IS5-IS4, IS4-IS5-IS3, IS3-IS5-IS2, IS2-IS5-IS1) are taught to the mobile apparatus 10. In the above-described method, in order to teach all the routes to the mobile apparatus 10 in advance, image information for each of all the routes and for each direction, to be used for generating the movement routes is collected to be acquired, and collecting such the information takes time. Furthermore, in a case where the mobile apparatus 10 is provided with a device for capturing an image of forward direction alone, image information for each of an outward movement and a return movement is to be collected, and double of the above routes (in total 12 routes) are to be taught to the mobile apparatus 10.

To deal with this, when the communication terminal 70 performs registration of points in the route generation system 1, during a route learning mode before entering an autonomous movement mode in which the mobile apparatus 10 is caused to perform autonomous movement, adjacent information that is information on an adjacent point that is a point adjacent to a target point is selected among from the points that are previously registered and is registered along with point information that information on the target point. Accordingly, the route generation system 1 can easily generate a route connecting points to each other by using information on the adjacent point common to points that have not been connected to each other before in autonomous movement of the mobile apparatus 10.

For example, in the example of FIG. 2, the operator causes the mobile apparatus 10 to learn two routes, the street of longitudinal direction (IS1-IS5-IS3) and the street of lateral direction (IS2-IS5-IS4). After learning of the routes by the mobile apparatus 10, when the operator sets a start point (departure point) IS1 and an end point (arrival point) IS4, the route generation system 1 automatically generates a route (IS1-IS4-IS5) in which an adjacent point IS5 common to IS1 and IS4 is to be passed through. The two routes to be learned by the mobile apparatus 10 are not limited to the above, and for example, two routes of IS 1-IS5-IS4 and IS2-IS5-IS3 may be learned by the mobile apparatus 10.

### Configuration of Mobile Apparatus

Referring to FIG. 3, a configuration of the mobile apparatus 10 according to the present embodiment is described in detail. FIGS. 3A and 3B are diagrams each illustrating an example of a schematic configuration of a mobile apparatus. FIG. 3A illustrates a first configuration, and FIG. 3B illustrates a second configuration as an exemplary variation.

The mobile apparatus 10 illustrated in FIG. 3A includes a housing 11, a bumper 12, an image capturing device 13, an imaging position adjustment device 14, a support 15, a moving mechanism 16, a self-position specifying device 17, and an obstacle detection sensor 18. In the housing 11, a control device 30 that is placed at a body section of the mobile apparatus 10 and controls processing or operation of the mobile apparatus 10 is accommodated. The bumper 12 is provided on a front surface of the housing 11 in the moving direction of the mobile apparatus 10, and serves as a buffer in a case where the mobile apparatus 10 collides. The bumper 12 may be provided not only on the front surface of the housing 11 but also on a side surface or a back surface thereof.

The image capturing device 13 captures images of a subject such as a person, an object, or a landscape at the operation site where the mobile apparatus 10 is provided, to obtain captured images. The image capturing device 13 may be a digital camera (general image capturing device) that can acquire a planar image (detailed image), such as a digital single-lens reflex camera or a compact digital camera. Captured image data according to the captured image obtained by the image capturing device 13 is transmitted to the communication terminal 70 via a communication session established by a server computer such as the route management server 50.

The imaging position adjustment device 14 is a movable device that adjusts an imaging direction (orientation) of the image capturing device 13. The imaging position adjustment device 14 drives and rotates to adjust the imaging direction of the image capturing device 13 and to adjust a zoom amount (magnification) of imaging of the image capturing device 13. The image capturing device 13 and the imaging position adjustment device 14 may be provided as a single device of the image capturing device 13 to which an imaging position adjustment function is provided.

The captured image obtained by the image capturing device 13 may be a video image or a still image, or both of the video image and the still image. The captured image obtained by the image capturing device 13 may include audio data together with image data. In some embodiments, the image capturing device 13 is a wide-angle image capturing device that acquires a spherical (360 degree) panoramic image.

The wide-angle image capturing device is, for example, a spherical image capturing device for acquiring two hemispherical images from which a spherical (panoramic) image is to be generated by capturing an image of subject. The wide-angle image capturing device may be, for example, a wide-angle camera or a stereo camera capable of acquiring a wide-angle image having an angle of view equal to or larger than a predetermined value. In other words, the wide-angle image capturing device is an image capturing device that can acquire an image (a spherical image or a wide-angle image) captured using a lens having a focal length shorter than a predetermined value.

The mobile apparatus 10 may include a plurality of image capturing devices 13. In such a case, the plurality of image capturing devices 13 of the mobile apparatus 10 may include both a wide-angle image capturing device and a general image capturing device that captures a part of an image of subject captured by the wide-angle image capturing device to acquire a detailed image (planar image).

The image capturing device 13 may include a thermal image capturing device that images far-infrared rays (infrared light) or a special camera such as an infrared camera that images near-infrared rays (infrared light). When being a thermal image capturing device that images far-infrared rays (infrared light), the image capturing device 13 can acquire a captured image (thermography) in which far-infrared rays emitted from an object are detected, and recognize the object from the captured image. When being an infrared camera that captures near-infrared rays (infrared light), the image capturing device 13 can acquire a captured image (infrared image) obtained by capturing an object without being affected by disturbance light in a visible light wavelength band, and can recognize the object from the captured image.

The support 15 is a member for securing (fixing) the image capturing device 13 and the imaging position adjustment device 14 on the mobile apparatus 10 (housing 11). The support 15 may be a pole attached to the housing 11 or a base attached to the housing 11.

The moving mechanism 16 (16a, 16b) is a unit that causes the mobile apparatus 10 to move, and includes wheels, a traveling motor, a traveling encoder, a steering motor, a steering encoder, etc. Since movement of the mobile apparatus 10 can be controlled using any known method, a detailed description thereof is omitted. For example, the mobile apparatus 10 receives from the operator (the communication terminal 70) an instruction to travel, and the moving mechanism 16 moves the mobile apparatus 10 according to the received instruction. The moving mechanism 16 may be of a bipedal type or a single-wheel type. The shape or the appearance of the mobile apparatus 10 is not limited to the one similar to that of a vehicle as illustrated in FIG. 3A or FIG. 3B. The mobile apparatus 10 may be designed to be, for example, a bipedal walking robot that mimics human-being, a robot that mimics any living creature, or a robot that mimics a specific character.

The self-position specifying device 17 includes cameras 17f, 17b, 17l, and 17r that captures images of subject in the front (f), back (b), left (l), and right (r) directions of the mobile apparatus 10, respectively. Captured image data according to the captured images obtained by the cameras 17f, 17b, 17l, and 17r is transmitted to the communication terminal 70 via a communication session established by a server computer such as the route management server 50.

The self-position specifying device 17 is not limited to a device including the cameras 17f to 17r. The self-position specifying device 17 may include, for example, a global positioning system (GPS) sensor and simultaneous localization and mapping (SLAM) using light detection and ranging (LIDAR). Alternatively, the self-position specifying device 17 may include magnetic induction for a case of being in an environment in which a magnetic tape is laid on a traveling route, for example.

As described above, by providing the cameras 17f to 17r on four sides of front, back, left, and right as the self-position specifying device 17, not only captured images in the front and back direction but also captured images in the left and right direction are transmitted to the communication terminal 70. Since the captured images in the left and right directions are transmitted, the operator who views the communication terminal 70 can easily find the widening of the road width, and thus recognition accuracy for the intersection is improved.

The obstacle detection sensor 18 is a detection sensor that detects an obstacle that may be present in the surroundings of the mobile apparatus 10 that is moving. The obstacle detection sensor 18 may be an image sensor such as a stereo camera or a camera with an area sensor in which photoelectric conversion elements are arranged in a planar manner. Alternatively, the obstacle detection sensor 18 may be a distance measuring sensor such as a time of flight (TOF) sensor, a LIDAR sensor, or a radar sensor.

A variation of the configuration of the mobile apparatus is described below with reference to FIG. 3B. A mobile apparatus 10a as the variation illustrated in FIG. 3B is provided with a camera 17a serving as the self-position specifying device 17 on the upper surface of the image capturing device 13. The camera 17a is a wide-angle image capturing device such as an omnidirectional camera that can capture an image of surroundings of the mobile apparatus 10. In this case as well, not only the captured images in the front and back directions but also the captured images in the left and right directions are transmitted to the communication terminal 70. Accordingly, the operator who views the communication terminal 70 can easily find the widening of the road width, and thus the recognition accuracy of the intersection is improved.

The mobile apparatus 10 may include various sensors that detect information on the surroundings of the mobile apparatus 10 in addition to the above components. Examples of various sensors include a barometer, a thermometer, a photometer, a motion sensor, a gas sensor, an odor sensor, and an illuminometer. The mobile apparatus 10 may further include a movable arm that performs an additional operation other than the movement.

### Hardware Configuration

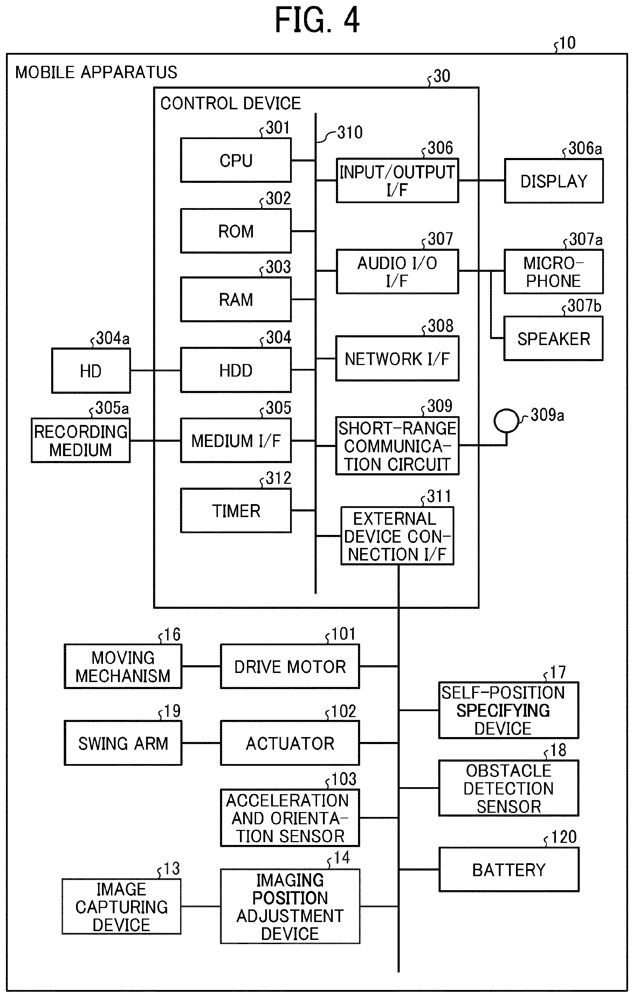

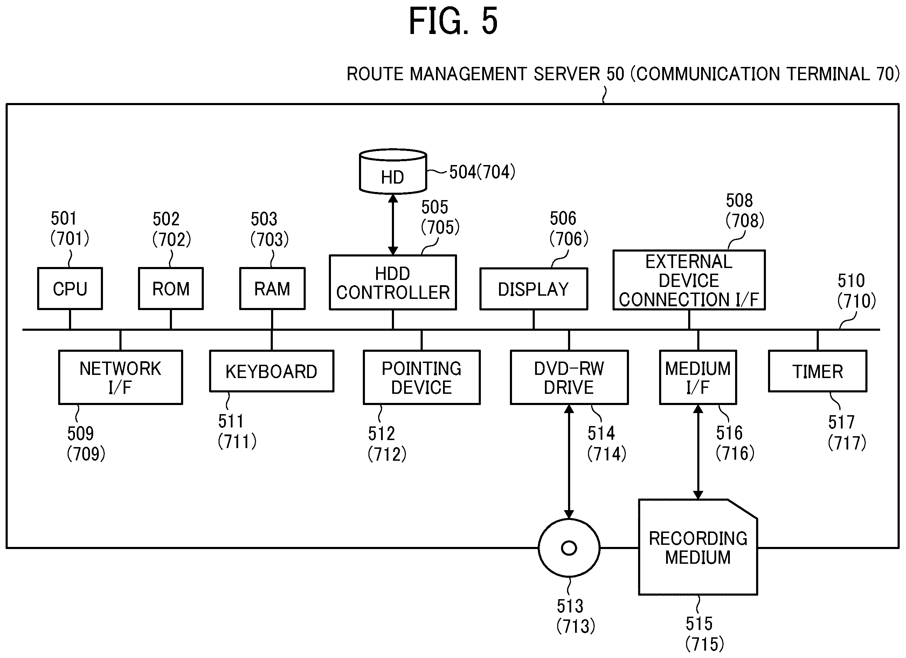

Referring to FIGS. 4 and 5, a hardware configuration of an apparatus or a terminal included in the route generation system according to the present embodiment is described. Each hardware configuration of the apparatus or the terminal illustrated in FIG. 4 or FIG. 5 may have elements added or deleted as appropriate.

### Hardware Configuration of Mobile Apparatus

FIG. 4 is a block diagram illustrating an example of a hardware configuration of the mobile apparatus 10. The mobile apparatus 10 includes the control device 30 that controls processing or operation of the mobile apparatus 10. As described above, the control device 30 is incorporated in the housing 11 of the mobile apparatus 10. The control device 30 may be provided outside the housing 11 of the mobile apparatus 10, or may be provided as a device separate from the mobile apparatus 10.

The control device 30 includes a Central Processing Unit (CPU) 301, a Read Only Memory (ROM) 302, a Random Access Memory (RAM) 303, a Hard Disk Drive (HDD) 304, a medium interface (I/F) 305, an input/output I/F 306, an audio input/output I/F 307, a network I/F 308, a short-range communication circuit 309, an antenna 309a of the short-range communication circuit 309, an external device connection I/F 311, a timer 312, and a bus line 310.

The CPU 301 controls entire operation of the mobile apparatus 10. The CPU 301 is a processor that loads a program or data stored in the ROM 302, a hard disk (HD) 304a, etc. onto the RAM 303, to execute processing to achieve functions of the mobile apparatus 10.

The ROM 302 is a nonvolatile memory that keeps storing a program or data even after the power is turned off. The RAM 303 is a volatile memory used as a work area for the CPU 301. The HDD 304 controls reading or writing of various types of data from or to the HD 304a under control of the CPU 301. The HD 304a stores various types of data such as programs. The medium I/F 305 controls reading or writing (storing) of data from or to a recording medium 305a such as a universal serial bus (USB) memory, a memory card, an optical disc, or a flash memory.

The input/output I/F 306 is an interface for inputting and outputting characters, numerals, various instructions, etc. to and from various external devices. The input/output I/F 306 controls display of various types of information such as a cursor, a menu, a window, text, or an image on a display 306a such as a liquid crystal display (LCD). In some embodiments, a touch panel display provided with an input device is used as the display 306a. The input/output I/F 306 may be connected to an input device such as a mouse or a keyboard in addition to the display 306a.

The audio input/output I/F 307 is a circuit for inputting or outputting an audio signal to a microphone 307a or from a speaker 307b under control of the CPU 301. The microphone 307a is an example of audio collecting device, which is a built-in type, capable of inputting audio signals under control of the CPU 301. The speaker 307b is an example of reproducing device (reproducing means) for outputting a sound signal under control of the CPU 301.

The network I/F 308 is a communication interface for communicating (connecting) with another device or apparatus via the communication network 100. The network I/F 308 is, for example, a communication interface such as a wired or wireless LAN. The short-range communication circuit 309 is a communication circuit that communicates in compliance with NEAR FIELD COMMUNICATION (NFC), BLUETOOTH, or the like. The external device connection I/F 311 is an interface for connecting the control device 30 to another device. The timer 312 is a measurement device that has a time measurement function. The timer 312 may be a computer-based software timer.

The bus line 310 includes an address bus and a data bus. The bus line 310 electrically connects the above-described elements to each another and transfers address signals, data signals, or various control signals. The CPU 301, the ROM 302, the RAM 303, the HDD 304, the medium I/F 305, the input/output I/F 306, the audio input/output I/F 307, the network I/F 308, the short-range communication circuit 309, the external device connection I/F 311, and the timer 312 are connected to each other through the bus line 310.

The control device 30 is further connected, via the external device connection I/F 311, to a drive motor 101, an actuator 102, an acceleration and orientation sensor 103, the imaging position adjustment device 14, the self-position specifying device 17, the obstacle detection sensor 18, and a battery 120. The drive motor 101 drives the moving mechanism 16 to rotate based on an instruction from the CPU 301 to move the mobile apparatus 10 on the ground.

The actuator 102 changes a form of a swing arm 19 according to an instruction from the CPU 301. The swing arm 19 is provided with an operation unit that allows the mobile apparatus 10 to carry out operation other than the traveling. The swing arm 19 is provided with a hand for grasping an object such as a component, at the distal end of the swing arm 19, as the operation unit, for example. The mobile apparatus 10 performs a preset task (operation) by rotating the swing arm 19 or changing a form of the swing arm 19.

The acceleration and orientation sensor 103 includes various sensors such as an electromagnetic compass that senses geomagnetism, a gyrocompass, and an acceleration sensor. The battery 120 is a unit that supplies power to the entire mobile apparatus 10.

### Hardware Configuration of Route Management Server

FIG. 5 is a block diagram illustrating an example of a hardware configuration of the route management server 50. Each of the elements of hardware configuration of the route management server 50 is denoted by a reference numeral in 500 series.

The route management server 50 is implemented by a computer, and as illustrated in FIG. 5, includes CPU 501, ROM 502, RAM 503, HD 504, an HDD controller 505, a display 506, an external device connection I/F 508, a network I/F 509, a bus line 510, a keyboard 511, pointing devices 512, a Digital Versatile Disk Rewritable (DVD-RW) drive 514, a medium I/F 516, and a timer 517.

The CPU 501 controls entire operation of the route management server 50. The ROM 502 stores programs such as an initial program loader (IPL) used for driving the CPU 501. The RAM 503 is used as a work area for the CPU 501. The HD 504 stores various types of data such as a program. The HDD controller 505 controls reading or writing of various types of data to or from the HD 504 under control of the CPU 501.

The display 506 displays various information such as a cursor, menu, window, characters, or image. In one example, the display 506 is a touch panel display provided with an input device (input means). The external device connection I/F 508 is an interface that for connecting to various external devices. Examples of the external devices include, but are not limited to, a USB memory and a printer. The network I/F 509 is an interface that controls communication of data with an external device through the communication network 100. The bus line 510 is, for example, an address bus or a data bus, which electrically connects the elements such as the CPU 501 illustrated in FIG. 5.

The keyboard 511 is an example of an input device including a plurality of keys for inputting characters, numerical values, various instructions, and the like. The pointing device 512 is an example of an input device that allows a user to select or execute a specific instruction, select a target for processing, or move a cursor being displayed. The input device (input means) is not limited to the keyboard 511 and the pointing device 512, and may be a touch panel, a voice input device, or the like.

The DVD-RW drive 514 controls reading or writing of various types of data to or from a DVD-RW 513, which is an example of a removable recording medium. In alternative to the DVD-RW, any removable recording medium may be used such as a DVD-R, Blu-ray Disc (Registered Trademark), etc. The medium I/F 516 controls reading or writing (storing) of data from or to a storage medium (recording medium) 515 such as a flash memory. The timer 517 is a measurement device that has a time measurement function. The timer 517 may be a computer-based software timer.

### Hardware Configuration of Communication Terminal

FIG. 5 is a block diagram illustrating an example of a hardware configuration of the communication terminal 70. Each hardware element of the communication terminal 70 is denoted by a reference numeral in 700 series.

The communication terminal 70 is implemented by a computer and has the same configuration as that of the route management server 50 as illustrated in FIG. 5, and thus the description of each of the elements of the hardware configuration is omitted. The display 706 is an example of a display unit. The display unit as the display 706 may be an external device having a display function connected to the communication terminal 70. In this case, the display unit may be an external display such as an interactive white board (IWB). Alternatively, the display unit may be a projected surface (for example, a ceiling or a wall of a control site) on which an image from a projector (PJ) connected as an external device is projected.

Each of the above-described control programs may be recorded in a file in a format installable or executable on a computer-readable recording medium for distribution. Examples of the recording medium include a compact disc recordable (CD-R), a digital versatile disk (DVD), a Blu-ray Disc, an secure digital (SD) card, and a USB memory. In addition, such recording medium may be provided in the form of a program product to users within a certain country or outside that country. For example, the control device 30 executes the control program to implement the route generating method according to the present embodiment.

### Functional Configuration

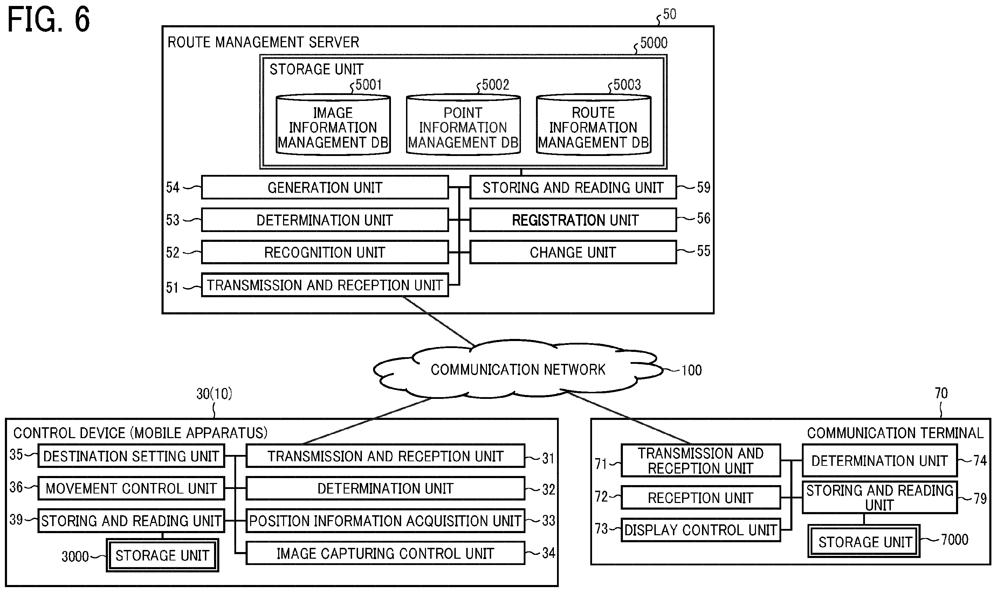

Referring to FIG. 6 to FIG. 10, a functional configuration of the route generation system 1 according to the present embodiment is described. FIG. 6 is a block diagram illustrating an example of a functional configuration of a route generation system according to an exemplary embodiment. FIG. 6 illustrates a part of apparatuses and terminals of FIG. 1, which are related to processing or operation to be described below.

### Functional Configuration of Mobile Apparatus (Control Device)

First, referring to FIG. 6, a functional configuration of the control device 30 that controls processing or operation of the mobile apparatus 10 is described according to the embodiment. The control device 30 includes a transmission and reception unit 31, a determination unit 32, a position information acquisition unit 33, an image capturing control unit 34, a destination setting unit 35, a movement control unit 36, and a storing and reading unit 39. These units are functions that are implemented by or that are caused to function by operating any of the hardware elements illustrated in FIG. 4 in cooperation with the instructions of the CPU 301 according to the control program, which is for a control device, expanded to the RAM 303. The control device 30 further includes a storage unit 3000 implemented by the ROM 302, the HD 304a, or the recording medium 305a illustrated in FIG. 4.

The transmission and reception unit 31 is implemented mainly by processing of the CPU 301 in relation to the network I/F 308 and transmits or receives various types of data or information to or from another device or terminal through the communication network 100. The determination unit 32 is implemented by processing of the CPU 301 and performs various determinations.

The position information acquisition unit 33 is implemented mainly by processing of the CPU 301 in relation to the external device connection I/F 311 and acquires position information indicating a current position of the mobile apparatus 10 based on captured image captured by the self-position specifying device 17. The captured images captured by the self-position specifying device 17 (the captured images obtained by capturing images in the front, back, left, and right directions from the mobile apparatus 10) are transmitted to other devices or terminals via the communication network 100.

The image capturing control unit 34 is implemented mainly by processing of the CPU 301 in relation to the external device connection I/F 311 and controls imaging processing performed by the image capturing device 13. For example, the image capturing control unit 34 instructs the image capturing device 13 to perform the image capturing processing. In addition, the image capturing control unit 34 acquires, for example, a captured image obtained by the image capturing processing performed by the image capturing device 13.

The destination setting unit 35 is implemented mainly by processing of the CPU 301, and sets a movement destination of the mobile apparatus 10. The destination setting unit 35 sets, based on a task execution request transmitted from the route management server 50, a position corresponding to content of a task as the movement destination of the mobile apparatus 10.

The movement control unit 36 is implemented mainly by processing of the CPU 301 with respect to the external device connection I/F 311, and controls movement of the mobile apparatus 10 by driving the moving mechanism 16.

The movement control unit 36 causes the mobile apparatus 10 to move, or travel, to the movement destination set by the destination setting unit 35 by driving the moving mechanism 16 according to information that indicates a start time to execute the task and is included in the task execution request transmitted from the route management server 50, for example.

The storing and reading unit 39 is implemented mainly by processing of the CPU 301 and stores various types of data or information in the storage unit 3000 or reads out various types of data or information from the storage unit 3000.

### Functional Configuration of Route Management Server

Referring to FIG. 6, a functional configuration of the route management server 50 according to the present embodiment is described below. The route management server 50 includes a transmission and reception unit 51, a recognition unit 52, a determination unit 53, a generation unit 54, a change unit 55, a registration unit 56, and a storing and reading unit 59. These units are functions that are implemented by or that are caused to function by operating any of the elements illustrated in FIG. 5 in cooperation with the instructions of the CPU 501 according to the control program, which is for a route management server, expanded to the RAM 503.

The route management server 50 further includes a storage unit 5000 that is implemented by the ROM 502, the HD 504, or the storage medium 515 illustrated in FIG. 5.

The transmission and reception unit 51 is implemented mainly by processing of the CPU 501 in relation to the network I/F 509 and transmits or receives various types of data or information to or from another device or terminal.

The recognition unit 52 is implemented by processing of the CPU 501 and recognizes start and end points, or departure and arrival points, for the mobile apparatus 10 or intersections. The determination unit 53 is implemented by processing of the CPU 501 and performs various determinations.

The generation unit 54 is implemented by processing of the CPU 501 and generates a movement route for the mobile apparatus 10. The generation unit 54 generates the movement route for the mobile apparatus 10 based on, for example, information on designated departure and arrival points and information on an adjacent point adjacent to the departure and arrival points.

The change unit 55 is implemented by processing of the CPU 501 and performs change processing such as dividing the movement route. The registration unit 56 is implemented by processing of the CPU 501, and registers a point or a route for a designated task.

The storing and reading unit 59 is implemented mainly by processing of the CPU 501 and stores various types of data or information in the storage unit 5000 or reads various types of data or information from the storage unit 5000.

### Image Information Management Table

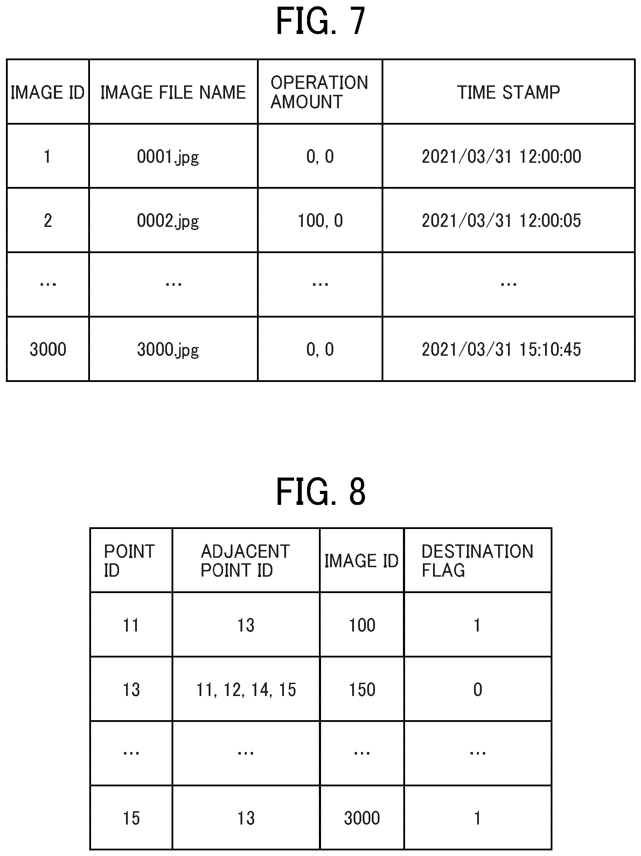

FIG. 7 is a conceptual diagram illustrating an example of an image information management table. The storage unit 5000 of the above-described route management server 50 stores an image information management database (DB) 5001 including an image information management table as illustrated in FIG. 7.

The image information management table manages captured images acquired from the self-position specifying device 17 (each of the cameras 17f to 17r) of the mobile apparatus 10, and a single image ID is assigned to a single image file. Each image ID is managed in association with an image file name, an operation amount, and a time stamp.

In a case of the mobile apparatus 10 as illustrated in FIG. 3A, which has a configuration in which the four cameras 17f to 17r are provided on the front, back, left, and right, as a captured image to be registered for each image ID, a set of four captured images that are acquired (captured) at the same time is registered for a single image ID. In a case of the mobile apparatus 10a as illustrated in FIG. 3B, which has a configuration in which the camera 17a that captures an image of the entire surroundings is included, a single captured image may be registered for a single image ID.

The operation amount indicates a set of values corresponding to the velocity (v) and the turning angular velocity (ω) of the mobile apparatus 10 received from the communication terminal 70, at the time of capturing the captured image. When the values of the velocity and the turning angular velocity are both 0, this means that the mobile apparatus 10 is in a stopped state. For example, when a captured image captured when the mobile apparatus 10 is stopped is desired to be selected, the information on the operation amount is useful. In the time stamp, a time when the mobile apparatus 10 operates is recorded.

In the image information management table illustrated in FIG. 7, for example, a captured image having an image file name of "0001.jpg" is assigned to an image ID of "1," and the image is captured with an operation amount of "0,0," in other words, in a state where the mobile apparatus 10 is stopped.

### Point Information Management Table

FIG. 8 is a conceptual diagram illustrating an example of a point information management table. The storage unit 5000 of the route management server 50 stores a point information management DB 5002 including a point information management table as illustrated in FIG. 8. The point information management DB 5002 is an example of a "point storage unit."

The point information management table manages records in each of which an adjacent point ID, an image ID, and a destination flag are associated with a point ID assigned to the intersection or the destination in the operation site where the mobile apparatus 10 is provided. The adjacent point ID represents a point having an adjacent relationship with respect to a point to which the point ID is assigned, and an example of adjacent point information (an example of second point information).

The image ID is associated with an image ID in the image information management table illustrated in FIG. 7, and is set as an image ID of a representative image of the point to which the point ID is assigned. As a default of the representative image, a captured image for which the operation amount (values of the velocity and the turning angular velocity of the mobile apparatus 10) described in FIG. 7 is 0, namely, an image captured in a stopped state of the mobile apparatus 10, is used. The representative image of the point captured by the mobile apparatus 10 and the image ID associated with the representative image of the point are examples of point information (examples of first information).

The destination flag indicates whether the point can be designated as a start point or an end point on the movement route of the mobile apparatus 10. When the point is a point that can be designated as a start point or an end point, a flag of "1" is input. The destination flag that is information on a point is an example of point information (example of first information).

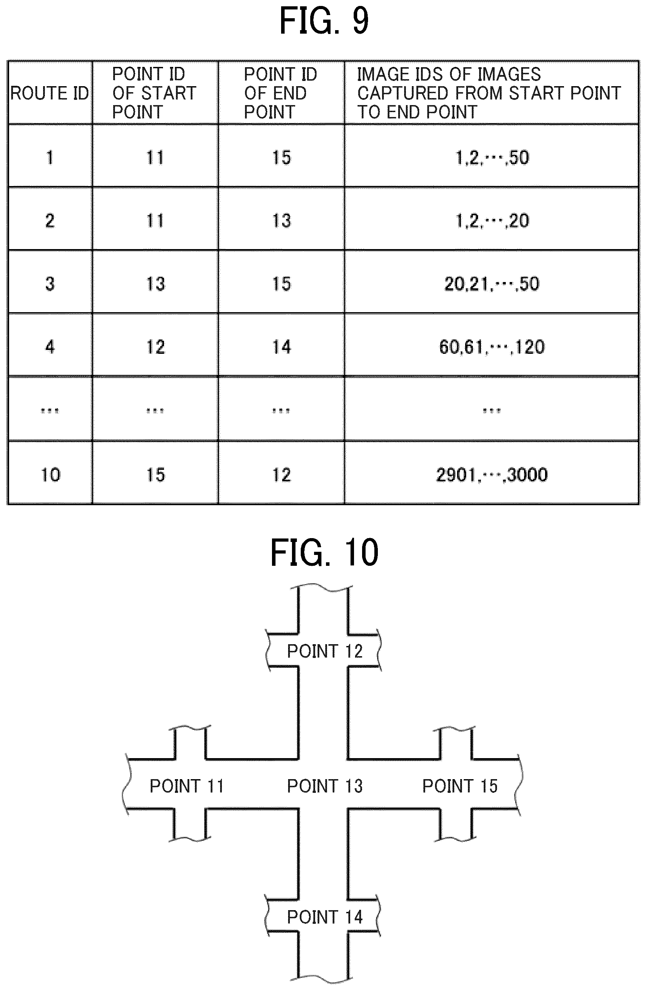

For example, the point information management table illustrated in FIG. 8 is based on the premise that each point has a positional relationship as illustrated in FIG. 10. In this case, since an adjacent point adjacent to the point 11 is a point 13, "13" is input as the adjacent point ID of the point ID of "11" in the point information management table. In addition, the representative image of the point ID of "11" is managed as an image ID of "100" in the image information management table. In addition, since the point ID of "11" is positioned as a point that can be designated as a start point or an end point in the example, "1" is input to the destination flag.

### Route Information Management Table

FIG. 9 is a conceptual diagram illustrating an example of a route information management table. The storage unit 5000 of the route management server 50 stores a route information management DB 5003 including a route information management table as illustrated in FIG. 9. The route information management DB 5003 is an example of a "route storage unit."

The route information management table stores the route generated by the generation unit 54. A route connecting two points is assigned to a single route ID, and a point ID of a start point of the route, a point ID of an end point of the route, and an image ID of a captured image captured from the start point to the end point are managed in association with each other.

For example, the route information management table illustrated in FIG. 9 is based on the premise that each point has a positional relationship as illustrated in FIG. 10. A route ID of "1" indicates that the route is a route having the point 11 in FIG. 10 as a start point and a point 15 as an end point. In addition, the record indicates that images of image IDs of "1" to "50" are captured by the self-position specifying device 17 (the cameras 17f to 17r) of the mobile apparatus 10 while the mobile apparatus 10 moves from the point 11 to the point 15. The generation unit 54 is an example of a "route generation unit."

When causing the mobile apparatus 10 to autonomously move on a route identified by a predetermined route ID, the route generation system 1 obtains an image ID associated with the predetermined route ID from the route information management table. Then, the image information management table is referred to, and an image file associated with the obtained image ID is acquired as a teaching image. Then, by comparing an image obtained by the self-position specifying device 17 while the mobile apparatus 10 is moving with the acquired teaching image, the mobile apparatus 10 can recognize its own position, and thus can autonomously move on a predetermined route.

### Functional Configuration of Communication Terminal

Next, a functional configuration of the communication terminal 70 is described with reference to FIG. 6. The communication terminal 70 includes a transmission and reception unit 71, a reception unit 72, a display control unit 73, a determination unit 74, and a storing and reading unit 79. These units are functions that are implemented by or that are caused to function by operating any of the elements illustrated in FIG. 5 in cooperation with the instructions of the CPU 701 according to the control program, which is for a communication terminal, expanded to the RAM 703. The communication terminal 70 further includes a storage unit 7000 implemented by the ROM 702, the HD 704, or the storage medium 715 illustrated in FIG. 5.

The transmission and reception unit 71 is implemented mainly by processing of the CPU 701 in relation to the network I/F 709 and transmits or receives various types of data or information to or from other devices or terminals through the communication network 100. The reception unit 72 is implemented by processing of the CPU 701 in relation to the keyboard 711 or the pointing device 712 and receives various selections or inputs from the operator.

The display control unit 73 is implemented mainly by processing of the CPU 701 and displays various screens on a display unit such as the display 706. The determination unit 74 is implemented by processing of the CPU 701 and performs various determinations. The storing and reading unit 79 is implemented mainly by processing of the CPU 701 and stores various types of data or information in the storage unit 7000 or reads various types of data or information from the storage unit 7000.

### Process and Operation

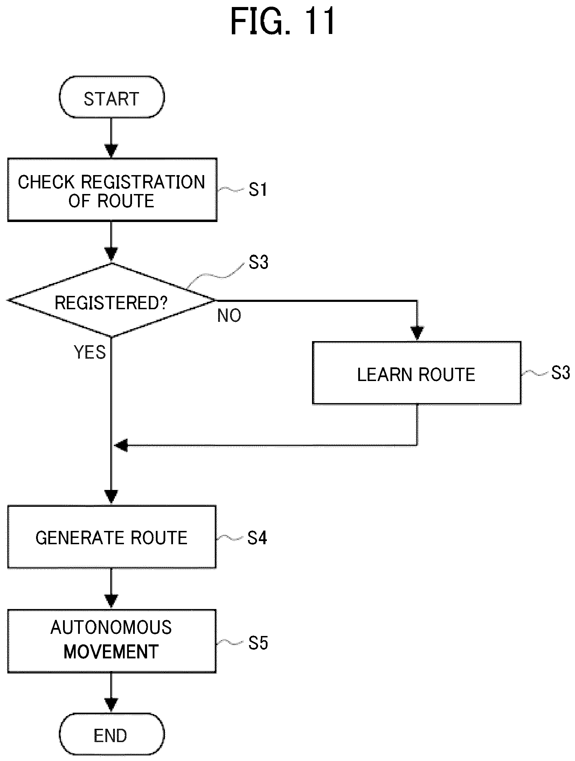

Referring to FIGS. 11 to 21, processes and operations of the route generation system 1 according to the present embodiment is described.

### Overall Operation

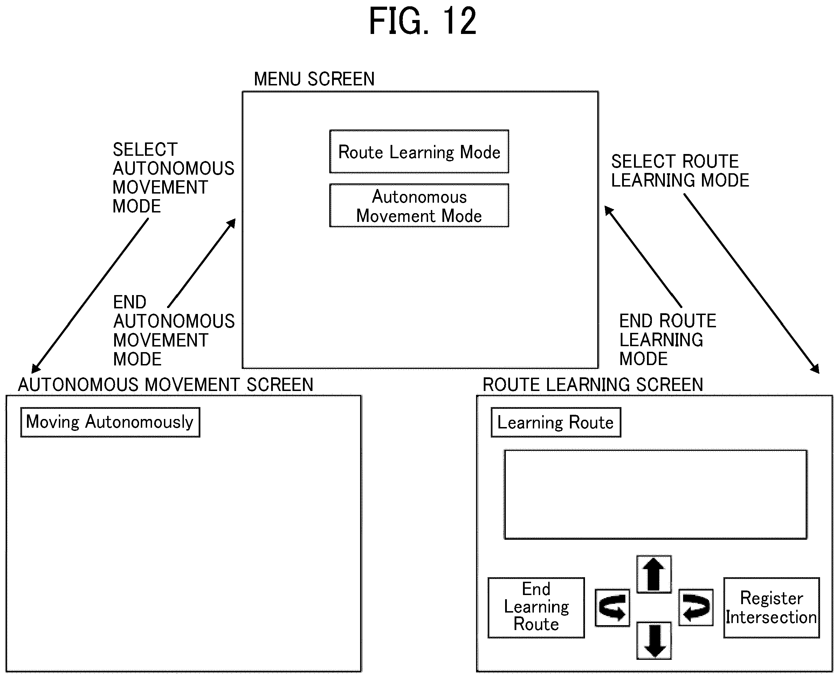

Before describing specific processing or operation, an overall operation according to the present embodiment is described with reference to FIGS. 11 and 12. FIG. 11 is a flowchart illustrating an example of a process until autonomous movement of the mobile apparatus 10 is performed. FIG. 12 is a diagram illustrating an example of transition of an operation screen.

In the present embodiment, for autonomous movement of the mobile apparatus 10, first, when an intended route for autonomous movement of the mobile apparatus 10 is set by the operator, the route generation system 1 checks a registration status of the route (step S1). Checking a registration status of the route in step S1 is checking whether points included in the intended route for autonomous movement of the mobile apparatus 10 is registered in the route generation system 1 or not.

When a check result of the registration status of the route is "registered" ("YES" in step S2), the route generation system 1 generates a route based on the registered route information (step S4). When the route is generated, the autonomous movement of the mobile apparatus 10 is performed (step S5).

In this case, for example, a menu screen as illustrated in FIG. 12 is displayed on the display 706 of the communication terminal 70 operated by the operator. When the operator selects the autonomous movement mode, the menu screen is switched to an autonomous movement screen, and the display 706 displays information indicating that the mobile apparatus 10 is autonomously moving. When the autonomous movement mode of the mobile apparatus 10 ends, the screen returns to the menu screen again.

On the other hand, when the check result of the registration state of the route indicates that the route is not registered ("NO" in step S2), the operator causes the mobile apparatus 10 to learn the route and registers the route in the route generation system 1 (step S3). In registering the route in step S3, the points included in the route to be newly registered are registered in the route generation system 1. Examples of the points to be registered include a start point, an end point, and each point to be passed on the way. As an example of each point passed on the way, for example, an intersection may be selected. In this case, for example, a route learning screen as illustrated in FIG. 12 is displayed on the display 706 of the communication terminal 70. The menu screen is switched to the route learning screen when the operator selects the route learning mode (details of the route learning screen is described later).

The operator can remotely operate the mobile apparatus 10 provided at the operation site by using the route learning screen. According to an operation of the operator, the mobile apparatus 10 is caused to move along the route to be newly registered and learn the route. When the route learning mode of the mobile apparatus 10 ends, the screen returns to the menu screen again. When the learning of the route ends, the route generation system 1 generates the route by using the information on the learned route (step S4), and when the route is generated, the autonomous movement of the mobile apparatus 10 is performed (step S5).

The generation of the route in step S4 is to determine a route along which the mobile apparatus 10 is to pass through each registered point. The more the number of registered points is, the more the number of orders and patterns in which the mobile apparatus 10 passes through the points. For example, by using a known algorithm, a passing order in which the registered points are to be passed with the shortest distance can be searched, and a route of the searched passing order can be determined as a route for autonomous movement of the mobile apparatus 10.

In step S5, for each route ID of the route corresponding to the autonomous movement route generated in step S4, an image ID is acquired by referring to the route information management table. Furthermore, an image ID is acquired by referring to the image information management table, and autonomous movement (autonomous traveling) is performed using an image file associated with the acquired image ID as a teaching image.

### Route Learning Process

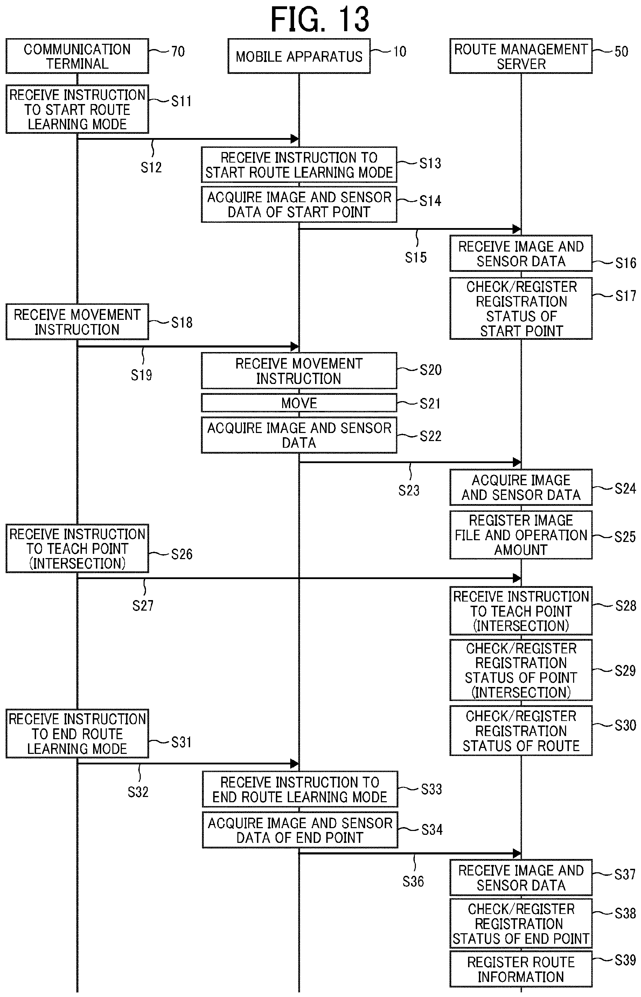

A process of causing the mobile apparatus 10 to learn a route, namely a route leaning process, is described with reference to FIG. 13. FIG. 13 is a sequence diagram illustrating an example of the route learning process.

First, when the operator at the control site performs an input operation with respect to the input device of the communication terminal 70 to select the route learning mode, the communication terminal 70 receives an instruction to start the route learning mode (step S11). The communication terminal 70 transmits the received instruction to start the route learning mode to the mobile apparatus 10 by the transmission and reception unit 71 (step S12).

In response to receiving the instruction to start the route learning mode from the communication terminal 70 by the transmission and reception unit 31 (step S13), the mobile apparatus 10 starts acquiring the image and the sensor data of the start point for the route learning mode by the position information acquisition unit 33 (step S14). At this time, the mobile apparatus 10 transmits the image and the sensor data acquired by itself to the route management server 50 by the transmission and reception unit 31 (step S15).

In response to receiving the image and the sensor data from the mobile apparatus 10 by the transmission and reception unit 51 (step S16), the route management server 50 checks whether the start point is a point previously registered in the point information management DB 5002 or not, in other words, checks the registration status and registers the registration status (step S17).

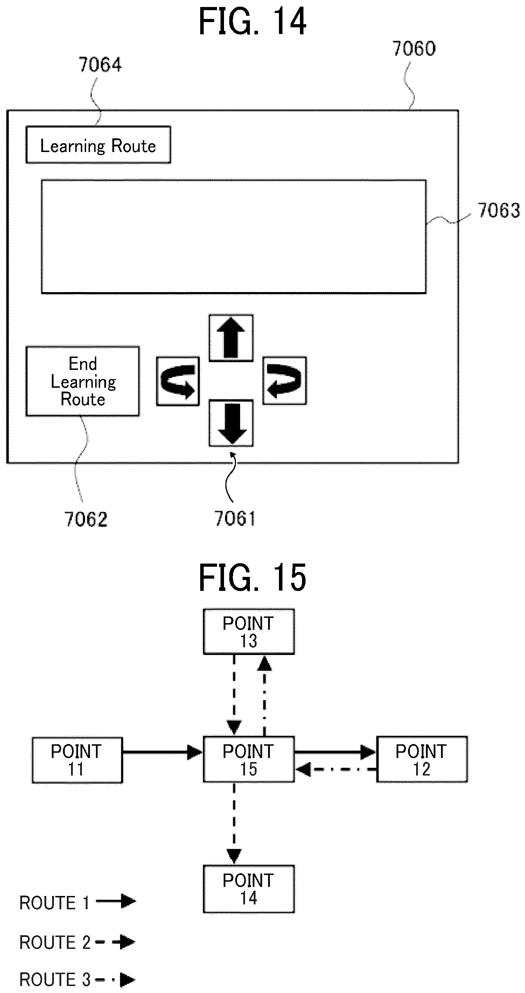

FIG. 14 is a diagram illustrating an example of an operation screen. In the route learning mode, an operation screen 7060 as illustrated in FIG. 14 is displayed on the display 706 of the communication terminal 70 by the display control unit 73. The operation screen 7060 includes a movement direction instruction portion 7061, a route learning end button 7062, an image presentation portion 7063, and a status display portion 7064. The route learning end button 7062 is an example of a "point teaching unit."

The movement direction instruction portion 7061 instructs about the movement direction of the mobile apparatus 10 in the front-back direction and the left-right turn. The route learning end button 7062 teaches the end point to the mobile apparatus 10 and instructs to end the route learning mode. The image presentation portion 7063 presents a captured image captured by the self-position specifying device 17 of the mobile apparatus 10 as a state of the surroundings of the mobile apparatus 10. The status display portion 7064 displays the current status of the mobile apparatus 10.

Accordingly, the image acquired by the mobile apparatus 10 in step S14 can be presented on the image presentation portion 7063 as, for example, a panoramically composited image, and the operator can see the state of the surroundings of the mobile apparatus 10 even at a place away from the mobile apparatus 10.

Regarding the start point, a specific point may be set to the start point so as to always start from the same point, or a point at which the mobile apparatus 10 is when the instruction to start the route learning mode is received may be set to the start point. In the latter case, since the starting point changes, the mobile apparatus 10 specifies the current position by using a self-position estimation algorithm each time when the route learning mode starts. For self-position estimation, a known method such as template matching based on image features, matching based on machine learning (self-position estimation based on imitation learning), matching of position information based on GPS, or self-position estimation based on LIDAR may be used.

In checking/registering the registration status of the start point in step S17, the recognition unit 52 checks whether the start point is registered in the point information management table of the point information management DB 5002 (whether the point is one to which a point ID is assigned or not). When the start point is not registered in the point information management table, the registration unit 56 registers information on the start point in the image information management DB 5001 and the point information management DB 5002. In other words, in the image information management DB 5001, for the start point, an image file, an operation amount, and a time stamp are registered in association with a new image ID. In the point information management DB 5002, the point ID is registered in association with the image ID of the image information newly registered in the image information management DB 5001.

In a case where the start point is previously registered in the point information management table, the determination unit 53 checks whether the value of the destination flag in the point information management table of the point information management DB 5002 is "1" or not. When the value of the destination flag is "0," the value is rewritten to "1." In other words, as described above, the destination flag is a flag indicating whether the point can be designated as a departure point (start point) or an arrival point (end point) in a route of the autonomous movement of the mobile apparatus 10. Since "1" is input when the point corresponds to a point that can be designated as a start point or an end point, the value is rewritten to "1" to be registered when the value is "0" regardless of being the start point. As described above, in step S17, when the start point has already been registered, as a result of the checking for the start point, the registration does not have to be newly executed, and the process proceeds to checking for a destination flag. When the destination flag is appropriately registered, as a result of the checking for the destination flag, rewrite and registration of the destination flag does not have to be newly executed, and the process proceeds to the next step.

Next, the operator performs an input operation with respect to the input device of the communication terminal 70 to instruct about the movement direction of the mobile apparatus 10, and the communication terminal 70 receives a movement instruction of the mobile apparatus 10, accordingly (step S18). The instruction of the movement direction of the mobile apparatus 10 is performed by the operator operating the movement direction instruction portion 7061 of the operation screen 7060 illustrated in FIG. 14, for example. The communication terminal 70 transmits the received movement instruction to the mobile apparatus 10 by the transmission and reception unit 71 (step S19).

When the transmission and reception unit 31 receives the movement instruction from the communication terminal 70 (step S20), the mobile apparatus 10 starts moving according to the movement instruction (step S21). While moving in according to the movement instruction from the communication terminal 70, the mobile apparatus 10 acquires an image of the surroundings of the mobile apparatus 10 and the sensor data by the position information acquisition unit 33 (step S22). Then, the mobile apparatus 10 transmits the image and the sensor data acquired to the route management server 50 by the transmission and reception unit 31 (step S23).

The route management server 50 receives the image and the sensor data from the mobile apparatus 10 by the transmission and reception unit 51 (step S24), and sequentially registers the image file and the operation amount in the image information management DB 5001 by the storing and reading unit 59 (step S25). Transmitting the image and the sensor data to the route management server 50 in step S23 may be performed after the mobile apparatus 10 accumulates the image and the sensor data to some extent and when a predetermined amount of information or a predetermined time is reached.

The operator can perform an input operation with respect to the input device of the communication terminal 70 in order to cause the mobile apparatus 10 to move to a point to be learned. When the mobile apparatus 10 arrives at the point to be learned, the operator performs an input operation with respect to the input device of the communication terminal 70 to instruct to teach the point. As a result, the communication terminal 70 receives an instruction to teach the point for the mobile apparatus 10 (step S26). The communication terminal 70 transmits the received instruction to teach the point, to the route management server 50 by the transmission and reception unit 71 (step S27).

The instruction to teach the point to the mobile apparatus 10 is not limited to the instruction that is given by the operator who remotely operates the mobile apparatus 10 at a timing when the mobile apparatus 10 arrives at a target point while viewing the image (camera image) transmitted from the mobile apparatus 10. For example, the instruction to teach the point to the mobile apparatus 10 may be transmitted at a timing when the mobile apparatus 10 automatically recognizes a target point based on, for example, GPS information, map information, or image information, and the mobile apparatus 10 arrives at the target point. In this case, the determination unit 32 included in the mobile apparatus 10 functions as a point teaching unit.

The operation screen 7060 illustrated in FIG. 14 is an example of a case in which an instruction to teach a point to the mobile apparatus 10 is transmitted in response to automatic recognition by the mobile apparatus 10 based on, for example, GPS information, map information, or image information. For example, when the target point is an intersection, the mobile apparatus 10 can recognize a change in the road width by the cameras 17l and 17r mounted on the left and right side as illustrated in FIG. 3A, and automatically recognize the intersection by finding a widened road, accordingly. Alternatively, the intersection may be automatically recognized by using LIDAR.

In response to receiving the instruction to teach the point from the communication terminal 70 (step S28) by the transmission and reception unit 51, the route management server 50 checks the registration status, whether the target point taught according to a user operation performed by the operator has been registered in the point information management DB 5002 or not, and registers the registration status (step S29). In checking/registering the registration status of the point (Intersection) in step S29, the recognition unit 52 checks whether the target point (intersection) is registered in the point information management table of the point information management DB 5002 (whether the point is one to which a point ID is assigned or not).

When the target point is not registered in the point information management table, the registration unit 56 registers information on the target point in the point information management DB 5002. Specifically, among registered points through which the mobile apparatus 10 has passed before arriving at the target point, a point through which the mobile apparatus 10 has passed immediately before the target point is determined to be an adjacent point. Then, a point ID of the adjacent point is acquired as an adjacent point ID and registered in the point information management table. In addition, the image ID of the representative image of the target point is registered in the point information management table. When the target point has already been registered, as a result of the checking, registration for the target point does not have to be newly executed, and the process proceeds to the next step.

When the registration of the target point in the point information management DB 5002 (point information management table) is completed, the registration status is checked to determine whether the route including the target point has been registered in the route information management DB 5003 and registered (step S30). As described above, since it is assumed that the target point is not registered in the point information management table in the example, the information on the target point is registered in the route information management DB by the registration unit 56.

Specifically, the point ID of the start point at which the movement of the mobile apparatus 10 starts, the point ID of the end point, and the image IDs of the captured images captured from the start point to the target point are registered in the route information management table. As for the point ID of the end point in the route information management table, a state in which the point ID of the target point is temporarily registered is maintained until the next target point (intersection) is registered or until the end point is determined.

On the other hand, as a result of the check in step S29, when the target point has been already registered in the point information management table, the process proceeds to step S30. Specifically, the determination unit 53 determines whether the route connecting the target point and the adjacent point adjacent to the target point has not been registered in the route information management table by using the point ID of the start point and the point ID of the end point in the route information management table as search keys.

When a determination result in step S30 indicates that the route connecting the target point and the adjacent point has not been registered, the point ID of the start point at which the movement of the mobile apparatus 10 starts, the point ID of the end point, and the image IDs of the captured images captured from the start point to the target point are registered in the route information management table. As for the point ID of the end point in the route information management table, a state in which the point ID of the target point is temporarily registered is maintained until the next target point (intersection) is registered or until the end point is determined, and the processing from step S22 to step S25 is performed. On the other hand, when the route connecting the target point and the adjacent point has already been registered, the processing from step S22 to step S25 is performed until the next target point (intersection) is registered or until the end point is determined.

When the operator performs an input operation with respect to the input device of the communication terminal 70 to give an instruction to end the route learning mode, the communication terminal 70 receives the instruction to end the route learning mode (step S31). The instruction to end the route learning mode is given by the operator operating with respect to the route learning end button 7062 on the operation screen 7060 illustrated in FIG. 14, for example. The communication terminal 70 transmits the received instruction to end the route learning mode to the mobile apparatus 10 by the transmission and reception unit 71 (step S32).

In response to receiving the instruction to end the route learning mode from the communication terminal 70 by the transmission and reception unit 31 (step S33), the mobile apparatus 10 starts acquiring the image and the sensor data indicating the end point for the route learning mode by the position information acquisition unit 33 (step S34). At this time, the mobile apparatus 10 transmits the image and the sensor date acquired to the route management server 50 by the transmission and reception unit 31 (step S36). In response to receiving the image and the sensor information from the mobile apparatus 10 by the transmission and reception unit 51 (step S37), the route management server 50 checks whether the end point is a point previously registered in the point information management DB 5002 or not, in other words, checks the registration status and registers the registration status (step S38).

In checking/registering the registration status of the end point in step S38, the recognition unit 52 checks whether the end point is registered in the point information management table of the point information management DB 5002 (whether the point is one to which a point ID is assigned or not). When the end point is not registered in the point information management table, the registration unit 56 registers information on the end point in the point information management DB 5002. Specifically, among the registered points through which the mobile apparatus 10 has passed before arriving at the end point, a point through which the mobile apparatus 10 has passed immediately before the end point is captured as an adjacent point, and the point ID assigned to the adjacent point is registered in the point information management table as an adjacent point ID.

In addition, the image ID of the representative image of the end point is registered in the point information management table. The determination unit 53 checks whether the value of the destination flag is "1" in the point information management table, and rewrites and registers the value of the destination flag to "1" when the value is "0." As described above, in step S38, if the end point has already been registered as a result of the checking for the end point, registration for the end point does not have to be newly executed, and the process proceeds to checking for a destination flag. When the destination flag is appropriately registered as a result of the checking for the destination flag, rewrite and registration for the destination flag does not have to be newly executed, and the process proceeds to the next step.

When the registration of the end point in the point information management DB 5002 (point information management table) is completed, the registration unit 56 registers the route including the end point in route information management DB 5003 (step S39). Specifically, the point ID of the start point at which the movement of the mobile apparatus 10 starts, the point ID of the end point, and the image IDs of the captured images captured from the start point to the end point are registered in the route information management table. On the other hand, as a result of the check in step S38, when the end point has been already registered in the point information management table, the process proceeds to step S39, which is described above.

### Route Learning Process

Referring now to FIG. 15 to FIG. 19, a process for learning a route, a route learning process, according to the present embodiment is described. FIG. 15 is a diagram illustrating an example of routes. The example illustrated in FIG. 15 having five points (point 11 to point 15) is used for describing an exemplary process. A route connecting the point 11, the point 15, and the point 12 in this order is referred to as a route 1 (solid line), a route connecting the point 13, the point 15, and the point 14 in this order is referred to as a route 2 (broken line), and a route connecting the point 12, the point 15, and the point 13 in this order is referred to as a route 3 (alternate long and short dash line).

### Route Learning Process in Generating New Route

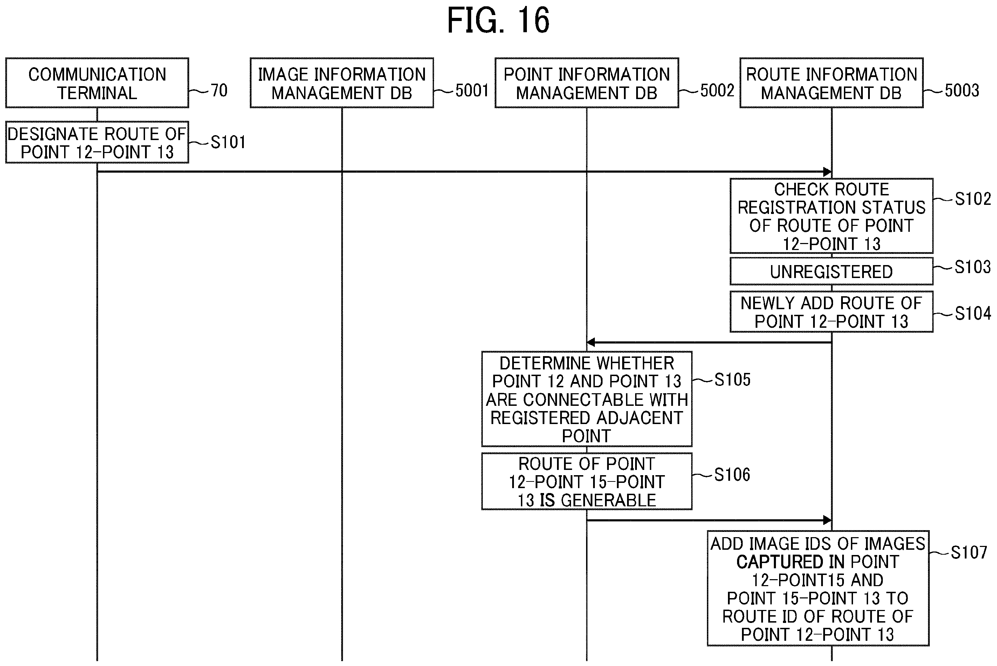

Referring to FIG. 16, a route learning process in a case of newly generating a route according to the present embodiment is described. FIG. 16 is a sequence diagram illustrating an example of a route learning process in a case of newly generating a route. Transmission of information between the communication terminal 70 and the information management DBs provided in the route management server 50 is illustrated. In the exemplary process described here, among the routes 1 to 3 illustrated in FIG. 15, the route 1 and the route 2 has been already registered, and processing in a case where the route 3 is generated.

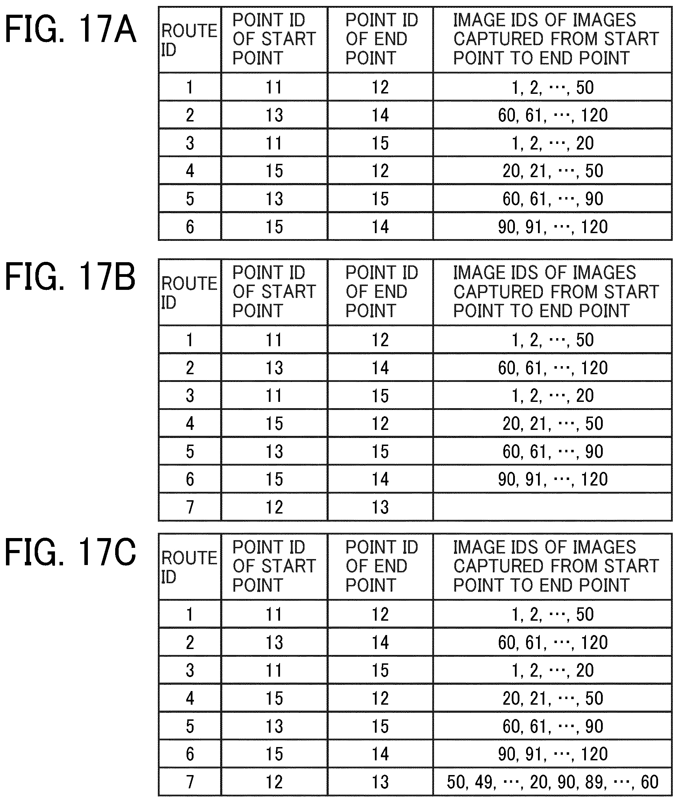

First, a route having the point 12 as a start point and the point 13 as an end point is designated as a new route on which the mobile apparatus 10 is to move in the communication terminal 70 (step S101). In response to the route designation from the communication terminal 70, whether the route connecting the point 12 and the point 13 has already been registered or not is checked based on the information of the route information management DB 5003 (step S102). The checking result in step S102 is "unregistered" (step S103). FIGS. 17A, 17B, and 17C are diagrams illustrating change in the route information management table when a new route is generated. The route information management table at the time of step S103 is as illustrated in FIG. 17A. In other words, at this time, there is no route having the point 12 as a start point and the point 13 as an end point.

Next, in response to the result in step S103, a route having the point 12 as a start point and the point 13 as an end point is newly added to the route information management table of the route information management DB 5003 in association with a route ID (step S104). The route information management table at the time of step S104 is as illustrated in FIG. 17B. In other words, the route having the point 12 as a start point and the point 13 as an end point is added with the route ID of "7."

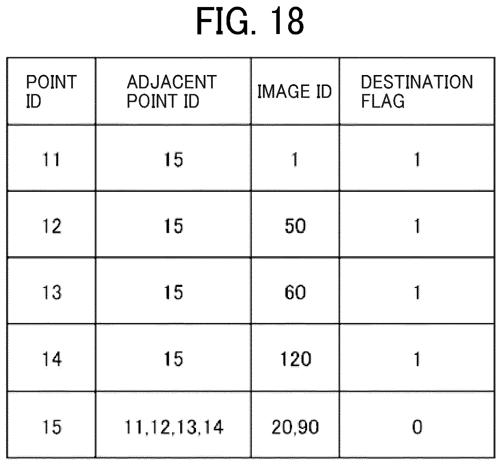

When information on the point 12 and the point 13 is added to the route information management table, the generation unit 54 calculates whether the point 12 and the point 13 can be connected using an adjacent point adjacent to the registered point based on the information of the point information management table (step S105). The point information management table at this time is illustrated in FIG. 18. FIG. 18 is a diagram illustrating an example of a point information management table in a case of generating a new route. In step S105, calculation, or determination, is performed based on the information on a point ID and an adjacent point ID in the point information management table. The adjacent point adjacent to the point 12 (point ID "12") and the point 13 (point ID "13") are both the point 15 (adjacent point ID "15"), and the point 15 is extracted as the adjacent point common to the point 12 and the point 13.

Then, the determination unit 53 determines that the route 3 (point 12-point 15-point 13) is generable as a new route having the point 12 as a start point and the point 13 as an end point by passing through the point 15 (step S106). Then, for the route determined to be generable in step S106, the route information management DB 5003 adds an image ID of an image captured on a way from point 12 to point 15 and an image ID of an image captured on a way from point 15 to point 13 to the route information management table as information associated with the route ID of "7" (step S107). FIG. 17C illustrates the route information management table when the addition of the route 3 with the route ID of "7" is completed by the step S107.

As described above, by connecting to an adjacent point, a route that has not been registered in the route information management DB 5003 is newly generable. This result in reducing an operation of causing the mobile apparatus 10 to actually move in the route learning mode every time a new route is generated.

### Route Learning Process in Adding Point on Registered Route

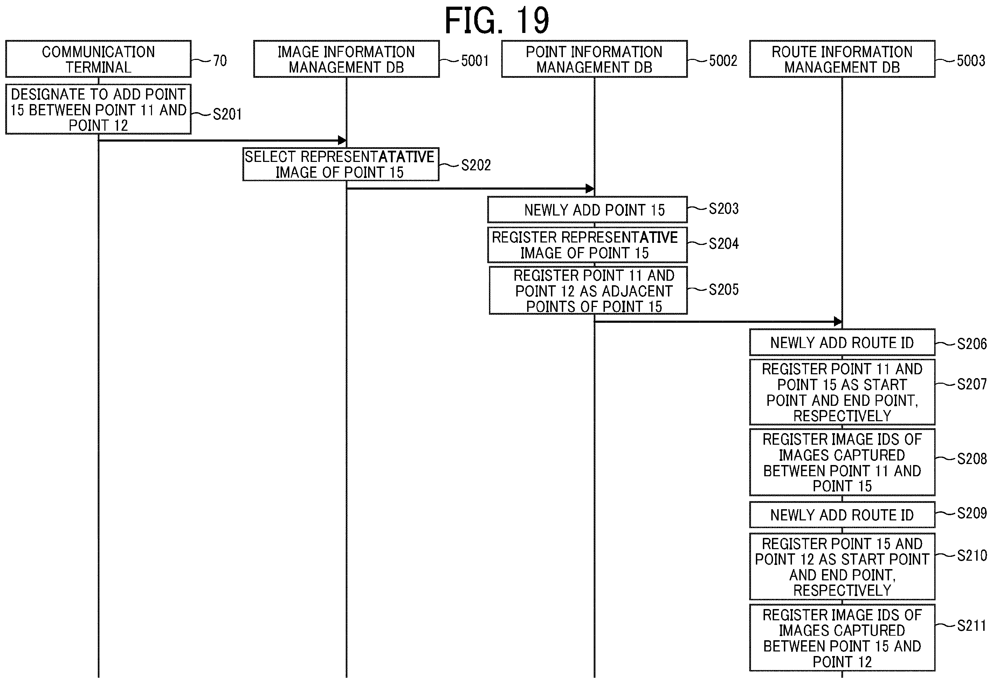

Referring to FIG. 19, a route learning process in a case of newly adding a point on a registered route according to the present embodiment is described. FIG. 19 is a sequence diagram illustrating an example of route learning in the case where a point is added on a registered route. Transmission of information between the communication terminal 70 and the information management DBs provided in the route management server 50 is illustrated.

In the exemplary process described here, it is assumed that a route directly connecting the point 11 and the point 12 without passing through the point 15 is registered in the route information management DB 5003 in FIG. 15. In the route information management table, a sequence of images having image IDs of "01"to "50" is registered in "IMAGE IDS OF IMAGES CAPTURED FROM START POINT TO END POINT." In addition, in the point information management table, the image ID of "01" is associated with the point ID of "11" assigned to the point 11, and the image ID of "50" is associated with the point ID of "12" assigned to the point 12.

First, in order to add the point 15 as a new point between the point 11 and the point 12, addition of the point 15 is designated with the communication terminal 70 (step S201). In response to the designation of addition of the point 15 by the communication terminal 70, in the image information management DB 5001, a representative image representing the point 15 is selected from images on the route connecting the point 11 and the point 12 (step S202).

The representative image may be extracted and selected based on a predetermined algorithm or may be selected by the operator viewing images.

When the representative image of the point 15 is selected, the point 15 is newly added in the point information management DB 5002, and for example, a point ID of "15" is assigned to the point 15 (step S203). Next, an image ID of the representative image of the point 15 selected in step S202 is registered in the point information management table (step S204). Further, the point IDs of "11" and "12" of the point 11 and the point 12 adjacent to the point 15 are registered as the adjacent point IDs of the point ID of "15" (step S205). At this time point, "0" is registered as a value of the destination flag in the point information management table, and when the point 15 is to be set to a destination such as a start point or an end point in the future, the value of the destination flag is rewritten to "1."

When the registration of the point 15 to the point information management DB 5002 is completed as described above, the route is divided by the change unit 55. In a route in which the point 11 and the point 12 are directly connected to each other, the route is long, an amount of information associated with one route ID increases, resulting in taking time to perform processing. According to the addition of the point 15 between the point 11 and the point 12, the route connecting the point 11 and the point 12 is divided into a route from the point 11 to the point 15 and a route from the point 15 to the point 12.

First, a route ID used for registering the route from the point 11 to the point 15 is newly added to the route information management table (step S206). Next, for the route ID newly added in step S206, the point ID of "11" of the point 11 set to a start point and the point ID of "15" of the point 15 set to an end point are registered (step S207). Next, in the route information management table, the image IDs (for example, a sequence of images of image IDs of "01" to "20") of captured images captured from the point 11 to the point 15 are registered.

Similarly, regarding from the point 15 to the point 12, a route ID used for registering the route from the point 15 to the point 12 is newly added to the route information management table (step S209). Next, for the route ID newly added in step S209, the point ID of "15" of the point 15 set to the start point and the point ID of "12" of the point 12 set to the end point are registered (step S210). Next, in the route information management table, the image IDs (for example, a sequence of images of image IDs of "20" to "50") of captured images captured from the point 15 to the point 12 are registered.

As described above, by dividing the route, the information associated with each route ID in the route information management DB 5003 can be divided into small pieces of information to be included, and the processing time for the information associated with each route ID can be reduced.

### Route Generating Process

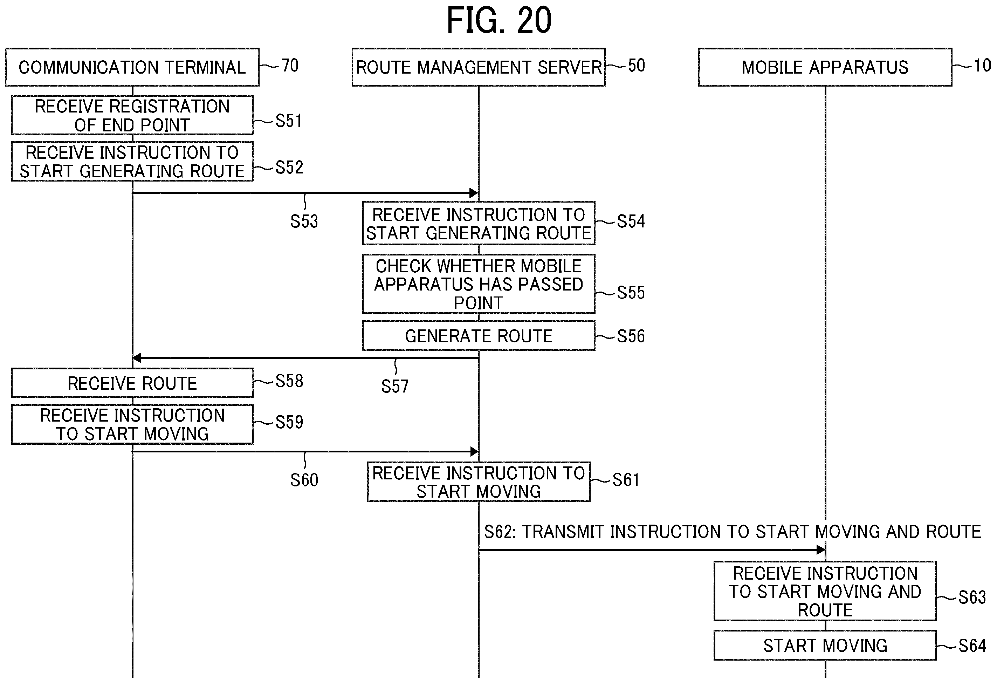

Next, a process of generating a route for autonomous movement of the mobile apparatus 10, namely a route generating process, is described with reference to FIG. 20. FIG. 20 is a sequence diagram illustrating an example of a route generating process.

When the operator at the control site performs an input operation with respect to the input device of the communication terminal 70 to register an end point of a route, the communication terminal 70 receives registration of the end point (step S51). Subsequently, when the operator performs an input operation with respect to the input device of the communication terminal 70 to instruct to start generating a route, the communication terminal 70 receives the instruction to start generating a route (step S52).

The communication terminal 70 transmits the received instruction to start generating a route to the route management server 50, by the transmission and reception unit 71 (step S53). In response to receiving the instruction to start generating a route from the communication terminal 70, by the transmission and reception unit 51 (step S54), the route management server 50 refers to the route information management DB 5003 to check whether the mobile apparatus 10 has an experience of passing through the registered end point or not (step S55).

When the determination indicates no experience of passing through, a route is generated based on the information of the point information management DB 5002 (step S56), and information indicating the generated route is transmitted to the communication terminals 70 (step S57). When the determination indicates present of an experience of passing through in step S55, step S56 is not executed and information indicating the route is transmitted to the communication terminals 70. As an algorithm for generating a route, a known technique such as a Dijkstra method for obtaining a shortest route, an A star (A*) algorithm, or a D star (D*) algorithm may be used.

The communication terminal 70 receives the information indicating the route from the route management server 50 (step S58). When the communication terminal 70 receives the information indicating the route, the operator performs an input operation with respect to the input device of the communication terminal 70 to instruct the mobile apparatus 10 to start moving, and the communication terminal 70 receives the instruction to start moving (step S59). The communication terminal 70 transmits the received instruction to start moving to the route management server 50 by the transmission and reception unit 71 (step S60).

In response to receiving the instruction to start moving from the communication terminal 70, by the transmission and reception unit 51 (step S61), the route management server 50 transmits the information indicating the route together with the instruction to start moving to the mobile apparatus 10 (step S62). In response to receiving the instruction to start moving and the information indicating the route from the route management server 50 (step S63), the mobile apparatus 10 starts moving (step S64).

The mobile apparatus 10 moves toward the end point registered in step S51. When arriving at the end point, the mobile apparatus 10 ends the movement.

### Autonomous Movement Process

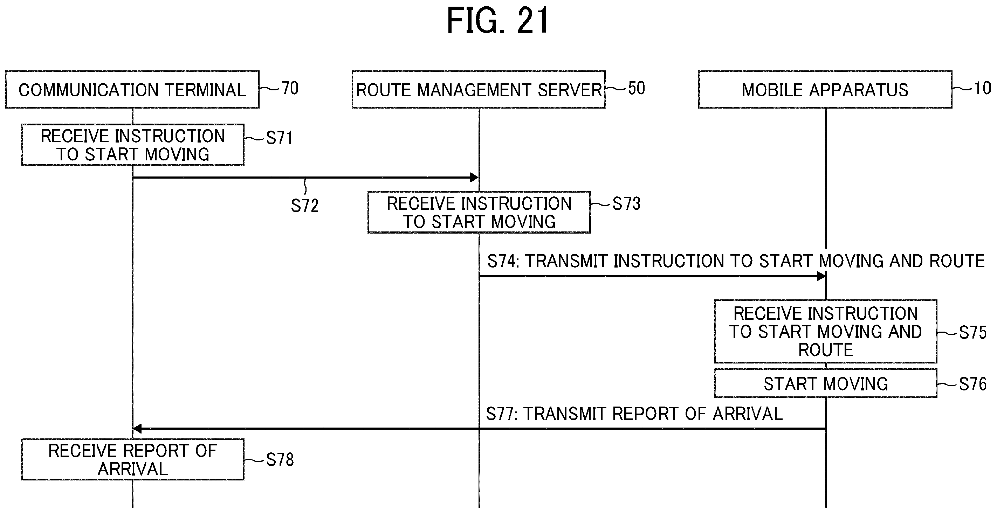

Next, a process for autonomous movement of the mobile apparatus 10, namely an autonomous movement process, is described with reference to FIG. 21. FIG. 21 is a sequence diagram illustrating an example of an autonomous movement process.

When the operator at the control site performs an input operation with respect to the input device of the communication terminal 70 to instruct the mobile apparatus 10 to start moving, the communication terminal 70 receives the instruction to start moving (step S71). The communication terminal 70 transmits the received instruction to start moving to the route management server 50 by the transmission and reception unit 71 (step S72). In response to receiving the instruction to start moving from the communication terminal 70, by the transmission and reception unit 51 (step S73), the route management server 50 transmits the information indicating the route together with the instruction to start moving to the mobile apparatus 10 (step S74).

In response to receiving the instruction to start moving and the information indicating the route from the route management server 50 (step S75), the mobile apparatus 10 starts moving (step S76). When reaching, or arriving at, the end point after autonomously moving along the route, the mobile apparatus 10 transmits a report indicating that the mobile apparatus 10 has arrived at the end point to the communication terminal 70 (step S77). The communication terminal 70 receives the report of arrival from the mobile apparatus 10 (step S78). This allows the operator to know that the mobile apparatus 10 has arrived at the end point.

### Variation

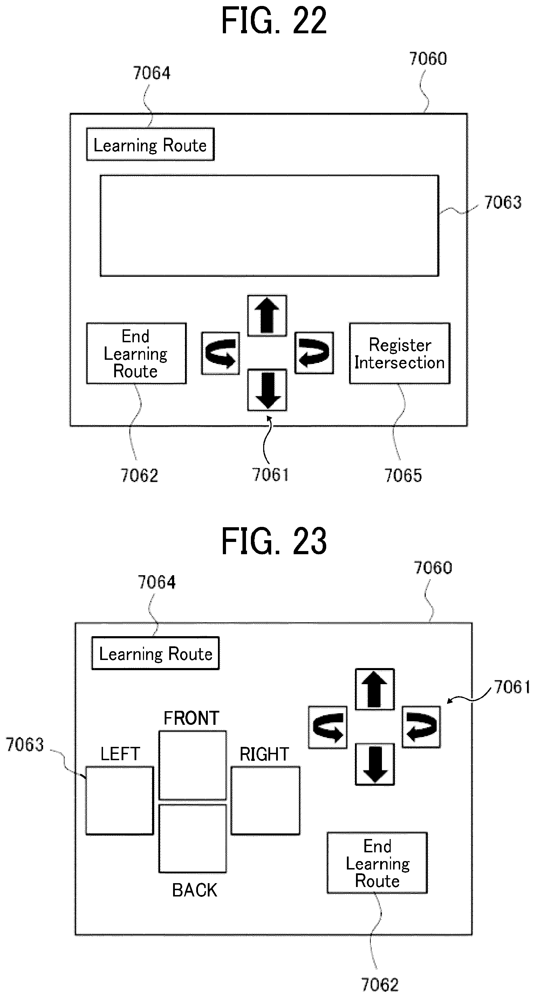

FIG. 22 is a diagram illustrating an exemplary variation of the operation screen. In the route learning mode, in alternative to the operation screen illustrated in FIG. 14, the operation screen 7060 illustrated in FIG. 22 may be displayed on the display 706 of the communication terminal 70. The operation screen 7060 is displayed on the display 706 by the display control unit 73. The operation screen illustrated in FIG. 22 is different from the operation screen illustrated in FIG. 14 in that an intersection registration button 7065 is provided.

In the operation screen illustrated in FIG. 14, an instruction to teach a point such as an intersection to the mobile apparatus 10 is automatically recognized by the mobile apparatus 10 based on, for example, GPS information, map information, and image information. On the other hand, in the operation screen 7060 illustrated in FIG. 22, the operator determines an intersection based on the captured image displayed on the image presentation portion 7063, and operates the intersection registration button 7065 when the operator determines the intersection. When the operator operates with respect to the intersection registration button 7065, the communication terminal 70 receives an instruction to teach a point (intersection) to the mobile apparatus 10. The intersection registration button 7065 is an example of a "point teaching unit."

FIG. 23 is a diagram illustrating an exemplary variation of the operation screen. In the route learning mode, in alternative to the operation screen illustrated in FIG. 14, the operation screen 7060 illustrated in FIG. 23 may be displayed on the display 706 of the communication terminal 70. The operation screen 7060 is displayed on the display 706 by the display control unit 73. The operation screen illustrated in FIG. 23 is different from the operation screen illustrated in FIG. 14 in the configuration of the image presentation portion 7063.

In the operation screen illustrated in FIG. 14, a panoramic composite image is presented on one image presentation portion, but in the operation screen 7060 illustrated in FIG. 23, the image presentation portion 7063 includes four frames, and front, back, left, and right images around the mobile apparatus 10 are presented in each frame.

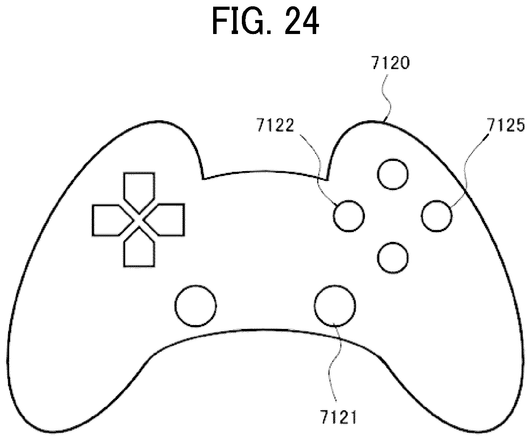

FIG. 24 is a diagram illustrating an exemplary variation of the operation screen. In the route learning mode, when the operator is at a relatively short distance at which the operator can visually recognize the mobile apparatus 10, the mobile apparatus 10 may be remotely operated using an operation device 7120 illustrated in FIG. 24 in alternative to the operation screen illustrated in FIG. 14.

The operation device 7120 includes a movement direction instruction portion 7121, an end point registration button 7122, and an intersection registration button 7125. The movement direction instruction portion 7121 is, for example, a track pad, and instructs a movement direction of the mobile apparatus 10 in the front-back direction and the left-right turn. The end point registration button 7122 teaches an end point to the mobile apparatus 10 and instructs the mobile apparatus 10 to end the route learning mode. With respect to the intersection registration button 7125, when the operator determines that the mobile apparatus 10 is at an intersection, the operator operates the intersection registration button 7125 to teach the intersection to the mobile apparatus 10. The end point registration button 7122 and the intersection registration button 7125 are examples of a "point teaching unit."

The arrangement of the movement direction instruction portion 7121, the end point registration button 7122, and the intersection registration button 7125 of the operation device 7120 and the association with each function are merely examples, and the present disclosure is not limited thereto. In a case that the mobile apparatus 10 has a configuration that automatically recognizes an intersection based on GPS information, map information, or image information, the intersection registration button 7125 may be omitted.

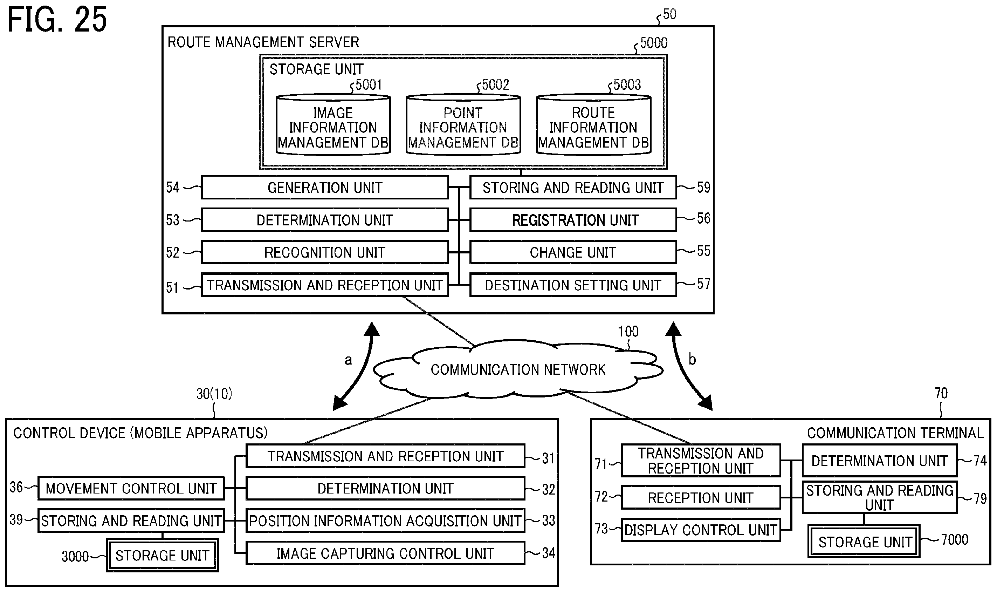

FIG. 25 is a diagram illustrating another example of a functional configuration of a route generation system. In comparison with the functional configuration of the route generation system illustrated in FIG. 6, the communication terminal 70 has the same configuration as the communication terminal 70 illustrated in FIG. 6. The control device 30 that controls the processing or operation of the mobile apparatus 10 has a configuration that is substantially same as the control device 30 illustrated in FIG. 6 except for the destination setting unit 35 that is removed.

In the route generation system illustrated in FIG. 25, the route management server 50 corresponds to, for example, a cloud computing service such as AMAZON WEB SERVICE (AWS), and in the route generation system, the control device 30 (the mobile apparatus 10) and the communication terminal 70 communicate with each other via the route management server 50 as indicated by an arrow a and an arrow b. In addition, the function of the destination setting unit 35 removed from the control device 30 is moved to the route management server 50. In other words, the route management server 50 includes a destination setting unit 57. The function of the destination setting unit 57 moved from the control device 30 (FIG. 6) to the route management server 50 is substantially the same as the function described with reference to FIG. 6, and the description thereof is omitted, accordingly.

As described above, in the route generation system, communication between the control device 30 (the mobile apparatus 10) and the communication terminal 70 is performed via the route management server 50 corresponding to a cloud computing service. In such a route management server 50, by using authentication processing by the cloud computing service during communication, security for a manual operation command from the communication terminal 70 or captured image data from the control device 30 (the mobile apparatus 10) are enhanced. Further, the route management server 50 (cloud service) is provided with the function of generating and managing data. Such data can be shared among a plurality of sites. This can flexibly support not only Peer to Peer (P2P) communication (one-to-one direct communication) but also one-to-multisite communication.

As described above, the route generation system 1 according to the above-described embodiment of the present disclosure includes the communication terminal 70 for performing a predetermined operation with respect to the mobile apparatus 10, and the route management server 50 communicably connected to the mobile apparatus 10 and the communication terminal 70 and managing information on a route along which the mobile apparatus 10 moves. The communication terminal 70 includes the route learning end button 7062 (or the intersection registration button 7065, the end point registration button 7122, or the intersection registration button 7125) for teaching a point included in the route to the mobile apparatus 10. The route management server 50 includes the point information management DB 5002 that stores information on the point and adjacent point information that is information on an adjacent point adjacent to the point among registered points that are previously registered, based on teaching by the route learning end button 7062 (or the intersection registration button 7065, the end point registration button 7122, or the intersection registration button 7125). The route management server 50 further includes the generation unit 54 that generates the route based on the information in the point information management DB 5002.

The route management server 50 includes the route information management DB 5003 for storing information on the route. In a case that the route including the point taught by the route learning end button 7062 (or the intersection registration button 7065, the end point registration button 7122, or the intersection registration button 7125) is not registered in the route information management DB 5003, the route is generated based on information on a registered route including a common adjacent point among registered routes that are previously registered.

As a result, the route connecting points that have never been connected before in the autonomous movement of the mobile apparatus 10 can be easily generated.

### The configurations described above are examples.

Although the route generation system, the route generating method, and the program according to one or more embodiments of the present disclosure have been described above, the present disclosure may be modified within the scope of the appended claims, such as other embodiments, additions, modifications, deletions, etc.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software is provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A route generation system (1), comprising:
an information processing apparatus (50);
a mobile apparatus (10) communicably connected to the information processing apparatus (50); and
a communication terminal (70) communicably connected to the information processing apparatus (50) and the mobile apparatus (10),
the communication terminal (70) including
a transmission unit (71, 701) configured to transmit, to the mobile apparatus (10), information on a user operation with respect to the mobile apparatus (10);
wherein the mobile apparatus (10) or the communication terminal (70) includes a point teaching unit (32, 301, 7062, 7065, 7122, 7125) configured to teach a first point to be included in a route for autonomous movement of the mobile apparatus (10)
wherein the information processing apparatus (50) comprises:
a registration unit (501, 56) configured to register first point information being information on the first point that is a specific position of the mobile apparatus (10) moving according to the user operation and is taught by the point teaching unit (32, 301, 7062, 7065, 7122, 7125), and second point information being information on a second point that is adjacent to the first point and is obtained from among one or more registered points that are points previously registered by the registration unit (501, 56); and
a route generation unit (501, 54) configured to generate the route based on the first point information and the second point information registered by the registration unit (501, 56);
wherein
the first point includes an intersection on the route, and the mobile apparatus (10) is configured to recognize the intersection by recognizing a change in a road width by a self-position specifying device (17) comprising at least one camera (17a; 17l, 17r).

2. The route generation system (1) of claim 1, wherein the information processing
apparatus further comprises
a route storage unit (5003) configured to store information on one or more registered routes, and
wherein in a case that the route including the first point taught by the point teaching unit (32, 301, 7062, 7065, 7122, 7125) is unregistered, the route generation unit (501, 54) generates the route based on information on one of the one or more registered routes, the one of one or more registered routes including the second point in common with the route.

3. The route generation system (1) of claim 1, wherein
the self-position specifying device (17) comprises cameras (17l, 17r) mounted on a left side and a right side of the mobile apparatus (10), respectively.

4. The route generation system (1) of claim 1, wherein
the self-position specifying device (17) comprises a camera (17a) being a wide-angle image capturing device.

5. A route generating method performed by an information processing apparatus (50) communicably connected to a mobile apparatus (10) and a communication terminal (70), comprising:
registering (S17, S29, S30, S38) first point information being information on a first point that is a specific position of the mobile apparatus (10) moving according to an operation performed with the communication terminal (70) communicably connected to the mobile apparatus (10), the first point being learned by the mobile apparatus (10) as being to be included in a route for autonomous movement of the mobile apparatus (10);
registering (S205) second point information being information on a second point that is adjacent to the first point and is obtained from among one or more registered points that are points previously registered; and
generating (S4, S39, S56) the route based on the first point information and the second point information;
wherein
the first point includes an intersection on the route, and the mobile apparatus (10) recognizes the intersection by recognizing a change in a road width by a self-position specifying device (17) comprising at least one camera (17a; 17l, 17r).

6. A carrier means carrying computer readable codes for controlling a computer system to carry out the method of claim 5.

## Patentansprüche

1. Routenerzeugungssystem (1), umfassend:
eine Informationsverarbeitungsvorrichtung (50);
eine mobile Vorrichtung (10), die kommunikativ mit der Informationsverarbeitungsvorrichtung (50) verbunden ist; und
ein Kommunikationsterminal (70), das kommunikativ mit der Informationsverarbeitungsvorrichtung (50) und der mobilen Vorrichtung (10) verbunden ist,
wobei das Kommunikationsterminal (70)
eine Übertragungseinheit (71, 701) umfasst, die dazu eingerichtet ist, Informationen über eine Benutzerbedienung bezüglich der mobilen Vorrichtung (10) an die mobile Vorrichtung (10) zu übertragen;
wobei die mobile Vorrichtung (10) oder das Kommunikationsterminal (70) eine Punkteinlerneinheit (32, 301, 7062, 7065, 7122, 7125) umfasst, die dazu eingerichtet ist, einen ersten Punkt einzulernen, der in eine Route für eine autonome Bewegung der mobilen Vorrichtung (10) aufgenommen werden soll,
wobei die Informationsverarbeitungsvorrichtung (50) umfasst:
eine Registrierungseinheit (501, 56), die dazu eingerichtet ist, erste Punktinformationen, welche Informationen über den ersten Punkt sind, der eine spezifische Position der mobilen Vorrichtung (10) darstellt, die sich entsprechend der Benutzerbedienung bewegt und durch die Punkteinlerneinheit (32, 301, 7062, 7065, 7122, 7125) eingelernt wird, sowie zweite Punktinformationen zu registrieren, welche Informationen über einen zweiten Punkt sind, der an den ersten Punkt angrenzt und aus einem oder mehreren registrierten Punkten erhalten wird, die zuvor durch die Registrierungseinheit (501, 56) registrierte Punkte sind; und
eine Routenerzeugungseinheit (501, 54), die dazu eingerichtet ist, die Route basierend auf den durch die Registrierungseinheit (501, 56) registrierten ersten Punktinformationen und zweiten Punktinformationen zu erzeugen;
wobei
der erste Punkt eine Kreuzung auf der Route umfasst, und die mobile Vorrichtung (10) dazu eingerichtet ist, die Kreuzung durch Erkennung einer Änderung einer Straßenbreite mittels einer Eigenpositionsbestimmungsvorrichtung (17), die mindestens eine Kamera (17a; 17l, 17r) umfasst, zu erkennen.

2. Routenerzeugungssystem (1) nach Anspruch 1,
wobei die Informationsverarbeitungsvorrichtung ferner umfasst:
eine Routenspeichereinheit (5003), die dazu eingerichtet ist, Informationen über eine oder mehrere registrierte Routen zu speichern, und
wobei in einem Fall, in dem die Route, die den durch die Punkteinlerneinheit (32, 301, 7062, 7065, 7122, 7125) eingelernten ersten Punkt umfasst, nicht registriert ist, die Routenerzeugungseinheit (501, 54) die Route basierend auf Informationen über eine der einen oder mehreren registrierten Routen erzeugt, wobei die eine der einen oder mehreren registrierten Routen den zweiten Punkt gemeinsam mit der Route umfasst.

3. Routenerzeugungssystem (1) nach Anspruch 1,
wobei die Eigenpositionsbestimmungsvorrichtung (17) Kameras (17l, 17r) umfasst, die jeweils auf einer linken Seite und einer rechten Seite der mobilen Vorrichtung (10) montiert sind.

4. Routenerzeugungssystem (1) nach Anspruch 1,
wobei die Eigenpositionsbestimmungsvorrichtung (17) eine Kamera (17a) als Weitwinkelbilderfassungsvorrichtung umfasst.

5. Routenerzeugungsverfahren, das durch eine Informationsverarbeitungsvorrichtung (50) ausgeführt wird, die kommunikativ mit einer mobilen Vorrichtung (10) und einem Kommunikationsterminal (70) verbunden ist, umfassend:
Registrieren (S17, S29, S30, S38) von ersten Punktinformationen, welche Informationen über einen ersten Punkt sind, der eine spezifische Position der mobilen Vorrichtung (10) darstellt, die sich entsprechend einer mittels des Kommunikationsterminals (70), das kommunikativ mit der mobilen Vorrichtung (10) verbunden ist, ausgeführten Operation bewegt, wobei der erste Punkt durch die mobile Vorrichtung (10) als in eine Route für eine autonome Bewegung der mobilen Vorrichtung (10) aufzunehmend eingelernt wird;
Registrieren (S205) von zweiten Punktinformationen, welche Informationen über einen zweiten Punkt sind, der an den ersten Punkt angrenzt und aus einem oder mehreren registrierten Punkten erhalten wird, die zuvor registrierte Punkte sind; und
Erzeugen (S4, S39, S56) der Route basierend auf den ersten Punktinformationen und den zweiten Punktinformationen;
wobei
der erste Punkt eine Kreuzung auf der Route umfasst, und die mobile Vorrichtung (10) die Kreuzung durch Erkennung einer Änderung einer Straßenbreite mittels einer Eigenpositionsbestimmungsvorrichtung (17), die mindestens eine Kamera (17a; 17l, 17r) umfasst, erkennt.

6. Trägermittel, das computerlesbare Codes trägt, um ein Computersystem zur Ausführung des Verfahrens nach Anspruch 5 zu steuern.

## Revendications

1. Système de génération d'itinéraire (1), comprenant :
un appareil de traitement d'informations (50),
un appareil mobile (10) relié avec faculté de communication à l'appareil de traitement d'informations (50), et
un terminal de communication (70) relié avec faculté de communication à l'appareil de traitement d'informations (50) et à l'appareil mobile (10) ;
le terminal de communication (70) comprenant
une unité de transmission (71, 701) conçue pour transmettre, à l'appareil mobile (10), des informations concernant une opération d'utilisateur ayant trait à l'appareil mobile (10),
l'appareil mobile (10) ou le terminal de communication (70) comprenant une unité d'enseignement de points (32, 301, 7062, 7065, 7122, 7125) conçue pour enseigner un premier point devant être compris dans un itinéraire pour un déplacement autonome de l'appareil mobile (10),
l'appareil de traitement d'informations (50) comprenant :
une unité d'enregistrement (501, 56) conçue pour enregistrer des informations de premier point, à savoir des informations concernant le premier point qui consiste en une position spécifique de l'appareil mobile (10) se déplaçant selon l'opération d'utilisateur et qui est enseigné par l'unité d'enseignement de points (32, 301, 7062, 7065, 7122, 7125), et des informations de deuxième point, à savoir des informations concernant un deuxième point adjacent au premier point et obtenu à partir d'un ou plusieurs points enregistrés, qui consistent en des points préalablement enregistrés par l'unité d'enregistrement (501, 56), et
une unité de génération d'itinéraire (501, 54) conçue pour générer l'itinéraire en fonction des informations de premier point et des informations de deuxième point enregistrées par l'unité d'enregistrement (501, 56) ;
le premier point comprenant une intersection présente sur l'itinéraire, et l'appareil mobile (10) étant conçu pour reconnaître l'intersection en reconnaissant une variation de la largeur de la route au moyen d'un dispositif de précision de position propre (17) comprenant au moins une caméra (17a ; 17l, 17r).

2. Système de génération d'itinéraire (1) selon la revendication 1, dans lequel l'appareil de traitement d'informations comprend en outre
une unité de stockage d'itinéraires (5003) conçue pour stocker des informations concernant un ou plusieurs itinéraires enregistrés ;
étant entendu que, si l'itinéraire comprenant le premier point enseigné par l'unité d'enseignement de points (32, 301, 7062, 7065, 7122, 7125) n'est pas enregistré, l'unité de génération d'itinéraire (501, 54) génère l'itinéraire en fonction d'informations concernant un itinéraire parmi le ou les itinéraires enregistrés, cet itinéraire parmi le ou les itinéraires enregistrés ayant, en commun avec l'itinéraire, ledit deuxième point.

3. Système de génération d'itinéraire (1) selon la revendication 1, dans lequel
le dispositif de précision de position propre (17) comprend des caméras (17l, 17r) montées respectivement sur le côté gauche et le côté droit de l'appareil mobile (10).

4. Système de génération d'itinéraire (1) selon la revendication 1, dans lequel
le dispositif de précision de position propre (17) comprend une caméra (17a) consistant en un dispositif de capture d'images grand angle.

5. Procédé de génération d'itinéraire effectué par un appareil de traitement d'informations (50) relié avec faculté de communication à un appareil mobile (10) et à un terminal de communication (70), comprenant :
l'enregistrement (S17, S29, S30, S38) d'informations de premier point, à savoir des informations concernant un premier point qui consiste en une position spécifique de l'appareil mobile (10) se déplaçant selon une opération effectuée au moyen du terminal de communication (70) relié avec faculté de communication à l'appareil mobile (10), le premier point étant appris par l'appareil mobile (10) comme devant être inclus dans un itinéraire pour un déplacement autonome de l'appareil mobile (10),
l'enregistrement (S205) d'informations de deuxième point, à savoir des informations concernant un deuxième point adjacent au premier point et obtenu à partir d'un ou plusieurs points enregistrés, consistant en des points précédemment enregistrés, et
la génération (S4, S39, S56) de l'itinéraire en fonction des informations de premier point et des informations de deuxième point ;
le premier point comprenant une intersection présente sur l'itinéraire, et l'appareil mobile (10) reconnaissant l'intersection en détectant une variation de la largeur de la route au moyen d'un dispositif de précision de position propre (17) comprenant au moins une caméra (17a ; 17l, 17r).

6. Moyen de support porteur de codes lisibles par ordinateur permettant de commander un système informatique pour la réalisation du procédé selon la revendication 5.
